# EUROPÄISCHE PATENTSCHRIFT

(11) **EP 0 848 723 B1**
(45) Veröffentlichungstag und Bekanntmachung des Hinweises auf die Patenterteilung: **21.04.1999**
(21) Anmeldenummer: 96930127.4
(22) Anmeldetag: 29.08.1996
(51) Int. Cl.: C08F 26/00, C11D 3/37

(54) **PULVERFÖRMIGE, PORÖSE, N-VINYLIMIDAZOL-EINHEITEN ENTHALTENDE POLYMERE, VERFAHREN ZU IHRER HERSTELLUNG UND IHRE VERWENDUNG**
POWDERY POROUS POLYMERS CONTAINING N-VINYLIMIDAZOL UNITS, PROCESS FOR THEIR PREPARATION AND THEIR USE
POLYMERES EN POUDRE, POREUX, A MOTIFS N-VINYLIMIDAZOL, LEUR PROCEDE DE PRODUCTION ET LEUR UTILISATION

(30) Priorität: 05.09.1995 DE 19532718
(43) Veröffentlichungstag der Anmeldung: 24.06.1998
(73) Patentinhaber: BASF AKTIENGESELLSCHAFT, 67056 Ludwigshafen (DE)
(72) Erfinder: STEIN, Stefan, D-55286 Wörrstadt (DE); BOECKH, Dieter, D-67117 Limburgerhof (DE); SCHADE, Christian, Dr., 67061 Ludwigshafen (DE); RÖSSLER, Gerhard, D-67141 Neuhofen (DE)
(86) Internationale Anmeldenummer: EP9603795
(87) Internationale Veröffentlichungsnummer: WO9709359

(56) Entgegenhaltungen:
- DE-A- 2 814 287
- DE-A- 4 421 179

## Beschreibung

Die Erfindung betrifft pulverförmige, poröse, N-Vinylimidazol-Einheiten enthaltende Polymere, Verfahren zur ihrer Herstellung durch radikalisch initiierte Polymerisation von N-Vinylimidazolen nach Art einer Fällungspolymerisation und Verwendung der Polymerisate als Zusatz zu phosphatfreien und phosphatreduzierten Waschmitteln zur Inhibierung der Farbstoffübertragung während des Waschvorgangs.

Polymerisate des 1-Vinylimidazols werden beispielsweise durch radikalische Polymerisation von 1-Vinylimidazol in wäßriger Lösung oder in Alkoholen hergestellt, vgl. DE-A-2 814 287. Um hochmolekulare oder vernetzte Polymerisate des 1-Vinylimidazols herzustellen, kann man sich der Fällungspolymerisation in Benzol bedienen, vgl. EP-A-0 162 388. Die Polymerisate fallen als vernetzte Gele an.

Die Verwendung von Copolymerisaten aus Vinylimidazol und Vinylpyrrolidon in unterschiedlich zusammengesetzten Waschmittelformulierungen ist Gegenstand der EP-A-0 635 563 und der EP-A-0 635 566. Diese Copolymerisate sind wasserlöslich. Sie werden üblicherweise durch Sprühtrocknung wäßriger Lösungen isoliert und in Form von Pulvern zur Herstellung der Waschmittel verwendet. Um die Polymerisate aus den wäßrigen Lösungen zu gewinnen, ist ein hoher Energieaufwand zur Verdampfung des wassers erforderlich.

Aus der älteren, nicht vorveröffentlichten deutschen Patentanmeldung P 44 21 179.1 ist die Verwendung von pulverförmigen, wasserunlöslichen, vernetzten Polymerisaten, die Einheiten von 1-Vinylpyrrolidon und/oder 1-Vinylimidazolen enthalten, als Additiv für Wasch- und Reinigungsmittel zur Verhinderung der Farbstoffübertragung während des waschvorgangs bekannt. Die Copolymerisate haben eine Teilchengröße von 0,1 bis 500 µm.

Aus der älteren, nicht vorveröffentlichten DE-Patentanmeldung 19 519 328.5 ist die Herstellung vernetzter Vinylimidazol-Vinylpyrrolidon-Copolymerisate in Tensiden und die Verwendung der so erhältlichen Copolymerisat/Tensid-Mischungen in Waschmitteln bekannt. Die Abtrennung der Copolymerisate aus der Mischung mit den meistens flüssigen bzw. wachsartigen Tensiden ist technisch sehr aufwendig.

Aus der US-A-3 689 439 ist die Herstellung vernetzter Polyvinylpyrrolidone durch Polymerisieren von N-Vinylpyrrolidon mit geeigneten Vernetzern in Gegenwart von Radikale bildenden Polymerisationsinitiatoren in wäßrigen Lösungen von Elektrolyten bekannt. Der Elektrolytegehalt beträgt 5 bis 80 Gew.-%, bezogen auf Wasser, wobei die Elektrolytekonzentration so hoch sein muß, daß eine Phasentrennung eintritt. Nach diesem Verfahren erhält man relativ grobteilige, zumeist perlförmige, harte Partikeln mit glatter Oberfläche. Ein weiterer Nachteil besteht darin, daß sich schwer entfernbare Beläge von Polymeren an der Kesselinnenwand und an dem Rührer abscheiden.

Der vorliegenden Erfindung liegt die Aufgabe zugrunde, ein verbessertes Verfahren zur Herstellung von feinteiligen, pulverförmigen, Imidazol-Einheiten enthaltenden Polymerisaten zur Verfügung zu stellen.

Die Aufgabe wird erfindungsgemäß gelöst mit pulverförmigen, porösen, N-Vinylimidazol-Einheiten enthaltenden Polymeren, die erhältlich sind durch radikalisch initiierte Polymerisation nach Art einer Fällungspolymerisation von
a) 5 bis 100 Gew.-% mindestens eines N-Vinylimidazols der Formel 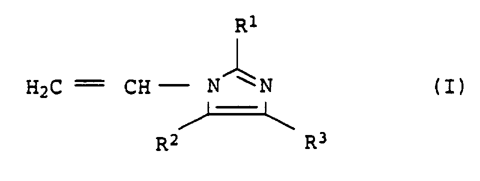 in der R¹, R² und R³ gleich oder verschieden sind und für H, C₁- bis C₄-Alkyl stehen,
   Monomere der Formel 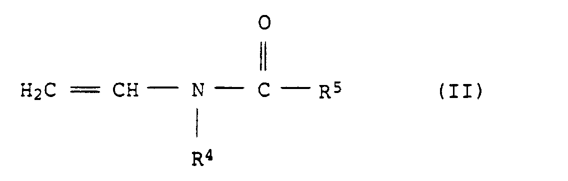 in der R⁴ und R⁵ gleich oder verschieden sind und für H, C₁- bis C₄-Alkyl stehen oder einen Ring aus 3 bis 5 Methylengruppen miteinander bilden, N-Vinyloxazoiidon, N-Vinyltriazol, 4-Vinylpyridin-N-oxid oder Mischungen der genannten Monomeren,
b) 0 bis 95 Gew.-% anderen copolymerisierbaren, monoethylenisch ungesättigten Monomeren und
c) 0 bis 50 Gew.% mindestens eines Monomeren mit mindestens zwei ethylenisch ungesättigten, nichtkonjugierten Doppelbindungen
in wäßriger Lösung, die 0,5 bis 30 Gew.% mindestens eines Elektrolyten und, bezogen auf die eingesetzten Monomeren, 0,5 bis 80 Gew.-% mindestens eines Tensids enthält.

Gegenstand der Erfindung ist außerdem ein Verfahren zur Herstellung der pulverförmigen, porösen, N-Vinylimidazol-Einheiten enthaltenden Polymeren, wobei man
a) 5 bis 100 Gew.-% mindestens eines N-Vinylimidazols der Formel 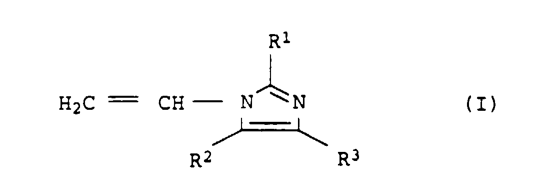 in der R¹, R² und R³ gleich oder verschieden sind und für H, C₁- bis C₄-Alkyl stehen,
   Monomere der Formel 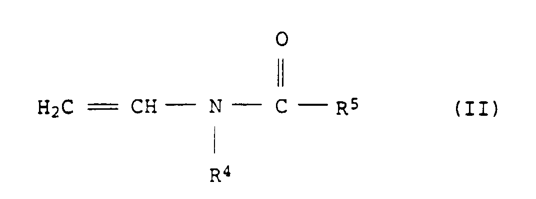 in der R⁴ und R⁵ gleich oder verschieden sind und für H, C₁ bis C₄-Alkyl stehen oder einen Ring aus 3 bis 5 Methylengruppen miteinander bilden, N-Vinyloxazolidon, N-Vinyltriazol, 4-Vinylpyridin-N-oxid oder Mischungen der genannten Monomeren,
b) 0 bis 95 Gew.% anderen copolymerisierbaren, monoethylenisch ungesättigten Monomeren und
c) 0 bis- 50 Gew.-% mindestens eines Monomeren mit mindestens zwei ethylenisch ungesättigten, nichtkonjugierten Doppelbindungen nach Art einer Fällungspolymerisation in Gegenwart von Radikale bildenden Initiatoren
in wäßrigen Lösungen polymerisiert, die 0,5 bis 30 Gew.-% mindestens eines Elektrolyten und, bezogen auf die eingesetzten Monomeren, 0,5 bis 80 Gew.-% mindestens eines Tensids enthalten.

Gegenstand der Erfindung ist außerdem die Verwendung der oben beschriebenen pulverförmigen, porösen, N-Vinylimidazol-Einheiten enthaltenden Polymeren als Zusatz von phosphatfreien und phosphatreduzierten Waschmitteln zur Inhibierung der Farbstoffübertragung während des Waschvorgangs.

Monomere der Formel I sind beispielsweise 1-Vinylimidazol, 2-Methyl-1-vinylimidazol, 2-Ethyl-1-vinylimidazol, 2-Propyl-1-vinylimidazol, 2-Butyl-1-vinylimidazol, 2,4-Dimethyl-1-vinylimidazol, 2,5-Dimethyl-1-vinylimidazol, 2-Ethyl-4-methyl-1-vinylimidazol, 2-Ethyl-5-methyl-1-vinylimidazol, 2,4,5-Trimethyl-1-vinylimidazol, 4,5-Diethyl-2-methyl-1-vinylimidazol, 4-Methyl-1-vinylimidazol, 5-Methyl-1-vinylimidazol, 4-Ethyl-1-vinylimidazol, 4,5-Dimethyl-1-vinylimidazol oder 2,4,5-Triethyl-1-vinylimidazol. Bei der Polymerisation kann man selbstverständlich auch Mischungen der vorstehend genannten Monomeren einsetzen.

Beispiele für Monomere der Formel II sind offenkettige N-Vinylamide, wie N-Vinylformamid, N-Vinylacetamid oder N-Methyl-N-vinylacetamid. Cyclische N-Vinylamide der Formel II sind beispielsweise N-Vinylpyrrolidon, N-Vinylpiperidon und N-Vinylcaprolactam. Von den Verbindungen der Formel II wird vorzugsweise N-Vinylpyrrolidon eingesetzt. Besonders bevorzugte Monomere der Gruppe a) sind 1-Vinylimidazol, 1-Vinyl-2-methylimidazol oder 1-Vinylpyrrolidon sowie Mischungen der genannten Monomeren in jedem beliebigen Verhältnis. Die Monomeren der Gruppe a) werden in Mengen von 5 bis 100, meistens in Mengen von 50 bis 100 und besonders bevorzugt von 85 bis 99,5 Gew.-%, bezogen auf die Gesamtmenge der bei der Polymerisation verwendeten Monomeren, eingesetzt.

Als Monomere der Gruppe b) kommen andere mit den Monomeren der Gruppe a) copolymerisierbare monoethylenisch ungesättigte Monomere in Betracht. Solche Monomere sind beispielsweise (Meth)Acrylester wie Methyl-, Ethyl-, Hydroxyethyl-, Propyl-, Hydroxypropyl-, Butyl, Ethylhexyl-, Decyl-, Lauryl-, i-Bornyl-, Cetyl-, Palmityl-, Phenoxyethyl- oder Stearylacrylat oder die entsprechenden Methacrylate, (Meth)Acrylamide wie Acrylamid, N-Methylol-acrylamid, N,N-Dimethylaminopropylacrylamid, N,N-Diethylaminopropylacrylamid, N-tert.-Butylacrylamid, N-tert.-Octylacrylamid, N-Undecylacrylamid oder die entsprechenden Methacrylamide, Vinylester mit 2 bis 30, insbesondere 2 bis 14 Kohlenstoffatomen im Molekül wie Vinylacetat, Vinylpropionat, Vinyllaurat, Neooctansäurevinylester, Neononansäurevinylester, Neodecansäurevinylester, Styrol, Vinyltoluol, α-Methylstyrol, ungesättigte Carbonsäuren wie Acrylsäure, Methacrylsäure, Crotonsäure, Maleinsäure, Fumarsäure, Itaconsäure oder ihre entsprechenden Anhydride, 2-Acrylamido-2-methylpropansulfonsäure, Acrylester, die über ein basisches N-Atom verfügen wie Diethylaminoethylacrylat, Dimethylaminoethylacrylat, Dimethylaminopropylacrylat oder die entsprechenden Methacrylester, 2-Vinylpyridin oder 4-Vinylpyridin. Besonders bevorzugt werden Alkyl(meth)acrylester, Vinylacetat, Styrol, Acrylsäure, Methacrylsäure, Maleinsäure und Monomere, die über ein basisches N-Atom verfügen.

Falls die Monomeren (b) eingesetzt werden, sind sie in Mengen bis zu 95, bevorzugt 2 bis 50 Gew.-%, bezogen auf die Gesamtmenge aller Monomeren, zugegen.

Als Monomere der Gruppe (c) kommen Verbindungen mit mindestens 2 ethylenisch ungesättigten, nichtkonjugierten Doppelbindungen im Molekül in Betracht. Verbindungen dieser Art sind Vernetzer. Geeignete Vernetzer sind zum Beispiel Acrylester, Methacrylester, Allylether oder Vinylether von mindestens zweiwertigen Alkoholen. Die OH-Gruppen der zugrundeliegenden Alkohole können dabei vollständig (bei 2-wertigen Alkoholen) oder teilweise (bei mindestens 3-wertigen Alkoholen) verethert oder verestert sein; die Vernetzer enthalten aber mindestens zwei ethylenisch ungesättigte Gruppen. Beispiele für die zugrundeliegenden Alkohole sind zweiwertige Alkohole wie 1,2-Ethandiol, 1,2-Propandiol, 1,3-Propandiol, 1,2-Butandiol, 1,3-Butandiol, 2,3-Butandiol, 1,4-Butandiol, But-2-en-1,4-diol, 1,2-Pentandiol, 1,5-Pentandiol, 1,2-Hexandiol, 1,6-Hexandiol, 1,10-Decandiol, 1,2-Dodecandiol, 1,12-Dodecandiol, Neopentylglykol, 3-Methylpentan-1,5-diol, 2,5-Dimethyl-1,3-hexandiol, 2,2,4-Trimethyl-1,3-pentandiol, 1,2-Cyclohexandiol, 1,4-Cyclohexandiol, 1,4-Bis(hydroxymethyl)cyclohexan, Hydroxypivalinsäure-neopentylglykolmonoester, 2,2-Bis (4-hydroxyphenyl)propan, 2,2-Bis[4-(2-hydroxypropyl)phenyl]propan, Diethylenglykol, Triethylenglykol, Tetraethylenglykol, Dipropylenglykol, Tripropylenglykol, Tetrapropylenglykol, 3-Thiapentan-1,5-diol, sowie Polyethylenglykole, Polypropylenglykole und Polytetrahydrofurane mit Molekulargewichten von jeweils 200 bis 10 000. Außer dem Homopolymerisaten des Ethylenoxids bzw. Propylenoxids können auch Blockcopolymerisate aus Ethylenoxid oder Propylenoxid oder Copolymerisate, die Ethylenoxid- und Propylenoxid-Gruppen eingebaut enthalten, eingesetzt werden. Beispiele für zugrundeliegende Alkohole mit mehr als zwei OH-Gruppen sind Trimethylolpropan, Glycerin, Pentaerythrit, 1,2,5-Pentantriol, 1,2,6-Hexantriol, Triethoxycyanursäure, Sorbitan, Zucker wie Saccharose, Glucose, Mannose. Selbstverständlich können die mehrwertigen Alkohole auch nach Umsetzung mit Ethylenoxid oder Propylenoxid als die entsprechenden Ethoxylate bzw. Propoxylate eingesetzt werden. Die mehrwertigen Alkohole können auch zunächst durch Umsetzung mit Epichlorhydrin in die entsprechenden Glycidylether überführt werden.

Weitere geeignete Vernetzer sind die Vinylester oder die Ester einwertiger, ungesättigter Alkohole mit ethylenisch ungesättigten C₃- bis C₆-Carbonsäuren, beispielsweise Acrylsäure, Methacrylsäure, Itaconsäure, Maleinsäure oder Fumarsäure. Beispiele für solche Alkohole sind Allylalkohol, 1-Buten-3-ol, 5-Hexen-1-ol, 1-Octen-3-ol, 9-Decen-1-ol, Dicyclopentenylalkohol, 10-Undecen-1-ol, Zimtalkohol, Citronellol, Crotylalkohol oder cis-9-Octadecen-1-ol. Man kann aber auch mehrwertige Carbonsäuren mit einwertigen, ungesättigten Alkoholen verestern, beispielsweise Malonsäure, Weinsäure, Trimellitsäure, Phthalsäure, Terephthalsäure, Citronensäure oder Bernsteinsäure.

Weitere geeignete Vernetzer sind Ester ungesättigter Carbonsäuren, wie beispielsweise der Ölsäure, Crotonsäure, Zimtsäure oder 10-Undecensäure, mit den oben beschriebenen mehrwertigen Alkoholen.

Geeignet sind außerdem geradkettig oder verzweigte, lineare oder cyclische, aliphatische oder aromatische Kohlenwasserstoffe, die über mindestens zwei Doppelbindungen verfügen, die bei aliphatischen Kohlenwasserstoffen nicht konjugiert sein dürfen, z.B. Divinylbenzol, Divinyltoluol, 1,7-Octadien, 1,9-Decadien, 4-Vinyl-1-cyclohexen, Trivinylcyclohexan oder Polybutadiene mit Molekulargewichten von 200 - 20 000. Als Vernetzer sind ferner geeignet die Acrylsäureamide, Methacrylsäureamide und N-Allylamine von mindestens zweiwertigen Aminen. Solche Amine sind zum Beispiel diaminomethan, 1,2-Diaminoethan, 1,3-Diaminopropan, 1,4-Diaminobutan, 1,6-Diaminohexan, 1,12-Dodecandiamin, Piperazin, Diethylentriamin oder Isophorondiamin. Ebenfalls geeignet sind die Amide aus Allylamin und ungesättigten Carbonsäuren wie Acrylsäure, Methacrylsäure, Itaconsäure, Maleinsäure, oder mindestens zweiwertigen Carbonsäuren, wie sie oben beschrieben wurden.

Geeignet sind auch mindestens 2 N-Vinyl-Gruppen enthaltende Verbindungen von Harnstoffderivaten, mindestens zweiwertigen Amiden, Cyanuraten oder Urethanen. Beispiele für Harnstoffderivate sind Ethylenharnstoff und Propylenharnstoff.Als zweiwertiges Amid kommt z.B. Weinsäurediamid in Betracht. N,N'-Divinylethylenharnstoff ist ein Beispiel für ein mindestens 2 N-Vinyl-gruppen enthaltendes Harnstoffderivat.

Weitere geeignete Vernetzer sind Divinyldioxan, Tetraallylsilan oder Tetravinylsilan. Selbstverständlich können auch Mischungen der vorgenannten Verbindungen eingesetzt werden. Vorzugsweise werden solche Vernetzer eingesetzt, die in der Reaktionsmischung löslich sind. Besonders bevorzugte Vernetzer sind Methylenbisacrylamid, Di- und Triallylamin, Divinylimidazol, N,N'-Divinylethylenharnstoff, Umsetzungsprodukte mehrwertiger Alkohole mit Acrylsäure oder Methacrylsäure, Methacrylsäureester und Acrylsäureester von Polyalkylenoxiden oder von mehrwertigen Alkoholen, die mit Ethylenoxid und/oder Propylenoxid und/oder Epichlorhydrin umgesetzt worden sind, Allylmethacrylat sowie Divinylbenzol. Ganz besonders bevorzugt sind Methylenbisacrylamid, N,N'-Divinylethylenharnstoff, Acrylsäure- und Methacrylsäureester von mindestens zweiwertigen C₂- bis C₄-Alkoholen, Allylmethacrylat sowie Divinylbenzol. Falls Vernetzer bei der Polymerisation eingesetzt werden, können sie in Mengen bis zu 50, vorzugsweise von 0,2 bis 30 und ganz besonders bevorzugt von 0,5 bis 15 Gew.-%, bezogen auf die bei der Polymerisation insgesamt eingesetzten Monomeren, verwendet werden.

Die erfindungsgemäßen Polymerisate werden in Gegenwart von Tensiden hergestellt. Geeignete Tenside sind beispielsweise in M. und I. Ash, Handbook of Industrial Surfactants, Gower Publishing Co., Hants, 1993 beschrieben. Tenside können niedermolekulare oder polymere Verbindungen sein. Sie können nichtionisch, kationisch oder anionisch sein. Besonders bevorzugt werden nichtionische Tenside.

Niedermolekulare, nichtionische Tenside enthalten im allgemeinen einen geradkettig oder verzweigten, gesättigten oder ungesättigten, cyclischen, acyclischen oder aromatischen Rest mit 8 bis 40, bevorzugt 10 bis 30, ganz besonders bevorzugt 12 bis 22 Kohlenstoffatomen im Molekül. Der Alkylrest kann auch ganz oder teilweise fluoriert vorliegen. Der Alkylrest ist an einen hydrophilen Molekülteil gebunden, der mindestens ein Sauerstoff- oder Stickstoffatom enthält. Bevorzugte Verbindungen sind beispielsweise Ether und Ester von Zuckern oder Zuckerderivaten, wie Saccharoseester, Mannoseester, Xyloseester oder Sorbitanester, Ester und Ether von Glycerin, Diglycerin, Polyglycerin oder Glycerin-Zukker-Kondensate, Ceramide und Glycosyl-Ceramide, Fettsäurealkanolamide wie Fettsäureethanolamide, Fettsäureisopropanolamide, Fettsäurediethanolamide, Fettsäurepolydiethanolamide, N-Alkylglucamide, N-Alkylpyrrolidonderivate, Pyrrolidon-5-carbonsäure-alkylester, Zitronen- und Weinsäureester, C₁- bis C₁₈-Alkyl(poly)glycoside, Hydroxyalkylpolyglycoside, Fettsäureester von Polyhydroxyverbindungen wie Trimethylolpropan, Erythrit, Pentaerythrit, Neopentyldiglykol, Triethanolamin oder daraus abgeleitete Kondensate, Alkoxylate, insbesondere die Additionsprodukte wie Ethylenoxid und/oder Propylenoxid an die oben aufgeführten Verbindungen sowie an Oxoalkohole, C₈- bis C₃₀-Alkohole, Alkylphenole, Fettsäureamide, Fettamine, Fettsäuren und Derivate wie Hydroxycarbonsäuren wobei die Polyalkylenoxidketten einseitig oder beidseitig modifiziert sein können. Bei beidseitiger Modifizierung können die modifizierenden Anteile gleich oder verschieden sein und z.B. zu einem Teil auch eine C₁ bis C₄-Etherfunktion darstellen.

Weitere grenzflächenaktive Verbindungen sind Sorbitanester, Saccharoseester oder Glycerinester von C₈- bis C₃₀-Carbonsäuren oder Alkoxylierungsprodukte dieser Ester. Die vorstehend genannten Ester leiten sich vorzugsweise von C₁₂- bis C₂₂-Carbonsäuren ab. Unter Alkoxylierungsprodukten sollen vorzugsweise die Additionsprodukte von Ethylenoxid an die Ester verstanden werden. Pro Mol der in Betracht kommenden Ester können bis zu 80 Mol Ethylenoxid addiert werden. Daneben eignen sich auch Additionsprodukte von Ethylenoxid und Propylenoxid und/oder von Butylenoxiden an die Ester als grenzflächenaktive Verbindungen. Ebenfalls geeignet sind Alkyldimethylaminoxide.

Polymere Tenside, die Ethylenoxid- und/oder Propylenoxid-Einheiten als hydrophilen Teil des Moleküls enthalten, sind unvernetzt und haben Molmassen von 500 bis 100000, vorzugsweise 700 bis 20000. Die polymeren Tenside können neben mindestens einem hydrophilen Block mindestens einen hydrophoben Block enthalten oder sie sind aus einer hydrophilen Kette mit kammartig angeordneten hydrophoben Ästen aufgebaut. Der hydrophile Teil der polymeren Tenside wird von Homopolymerisaten aus Ethylenoxid oder Propylenoxid oder von Blockcopolymerisaten aus Ethylenoxid und Propylenoxid sowie von Block- und Kammpolymerisaten mit Blöcken aus Polyethylenoxid, Polypropylenoxid oder Polyco(ethylenoxid, Propylenoxid) gebildet, während der hydrophobe Teil der polymeren Tenside von Blöcken aus Polystyrole, Polyalkyl(meth)acrylaten, Silikonölen, Polyhydroxifettsäuren, Polyamidoaminen, Polyisobutylen oder Polytetrahydrofuranen besteht. Es können auch allgemein Polymere, die über mindestens eine Aminogruppe, eine mit Basen deprotonierbare Hydroxylgruppe oder eine anionische Gruppe verfügen und eine Molmasse von 100 bis 5000 haben, mit Ethylenoxid, Propylenoxid oder Mischungen daraus zu geeigneten polymeren Tensiden umgesetzt werden.

Von den obengenannten Tensiden werden Additionsprodukte von Ethylenoxid und/oder Propylenoxid an C₁₀- bis C30-Alkohole, C₁- bis C₁₈-Alkylphenole, mindestens 12 C-Atome enthaltende Fettamine oder mindestens 10 C-Atome enthaltende Fettsäuren, N-Alkylglucamide, Saccharoseester, Sorbitanester, (Poly)Glycerinester oder ihre entsprechenden Ethoxylate sowie Alkyl(poly)glycoside besonders bevorzugt. Ganz besonders bevorzugt werden Additionsprodukte von Ethylenoxid und/oder Propylenoxid an C₁₂- bis C₂₂-Alkohole oder Alkylphenole, Sorbitanester, Glycerinester oder ihre entsprechenden Ethoxylate mit 12 bis 22 Kohlenstoffatomen in der Alkylkette sowie Alkyl(poly)glycoside mit 8 bis 22 Kohlenstoffatomen in der Alkylkette. Die Tenside besitzen beispielsweise einen Erweichungspunkt unter 100°C, bevorzugt unter 60°C und besonders bevorzugt unter 40°C.

Bezogen auf die bei der Polymerisation eingesetzten Monomeren verwendet man 0,5 bis 80, vorzugsweise 1 bis 60 Gew.-% mindestens eines Tensids.

Die Polymerisation der Monomeren erfolgt in wäßrigen Lösungen, die wasserlösliche Elektrolyte in gelöster Form enthalten. Der Elektrolytgehalt der wäßrigen Lösung beträgt 0,5 bis 30, vorzugsweise 1 bis 25 und liegt meistens in dem Bereich von 2 bis 20 Gew.-% (diese Angaben beziehen sich auf das eingesetzte Wasser).

Als Elektrolyte eignen sich beispielsweise Alkalimetall-, Erdalkalimetall-, Ammonium- oder Aluminiumsalze oder Mischungen solcher Salze. Beispiele hierfür sind Ammoniumsulfat, Natriumsulfat, Kaliumsulfat, Lithiumsulfat, Ammoniumacetat, Natriumacetat, Kaliumacetat, Ammoniumchlorid, Natriumchlorid, Kaliumchlorid, Natriumbromid, Natriumcarbonat, Natriumhydrogencarbonat, Ammoniumcarbonat, Ammoniumhydrogencarbonat, Kaliumcarbonat, Kaliumhydrogencarbonat, Calciumchlorid, Magnesiumchlorid, Aluminiumchlorid, Calciumnitrat, Magnesiumsulfaz, Aluminiumsulfat sowie wasserlöslich Phosphate, Hydrogenphosphate, Dihydrogenphosphate, Borate, Perborate und Sulfite. Auch Salze von organischen Aminen beispielsweise Diethylammoniumsulfat oder Ethanolammoniumsulfat sind als Elektrolyte geeignet. Besonders bevorzugt werden diejenigen Elektrolyte, die üblicherweise Bestandteil von Waschmittelformulierungen sind, beispielsweise Natriumsulfat, Natriumcarbonat und Natrium-Citrat.

Selbstverständlich kann man auch Elektrolytmischungen einsetzen wie Mischungen aus Natriumsulfat und Natriumcarbonat, oder Natriumsulfat und Natrium-Citrat.

Die Monomeren (a), (b) und (c) sind zumindest teilweise in Wasser löslich bzw. lösen sich darin in Gegenwart der anderen Reaktionspartner. Die bei der Polymerisation entstehenden Polymeren sind dagegen im Reaktionsmedium unlöslich und fallen aus. Die Polymerisation verläuft daher nach Art einer Fällungspolymerisation. Das in Wasser unlösliche oder darin nur begrenzt lösliche Polymer fällt während der Polymerisation aus dem Reaktionsgemisch aus. Der Feststoffgehalt des Polymerisationsansatzes, d.h. der Gehalt an Tensid, Polymer und Elektrolyt, wird so gewählt, daß die bei der Polymerisation anfallende Suspension während der gesamten Reaktionsdauer rührbar bleibt. Der Gesamtfeststoffgehalt liegt beispielsweise in dem Bereich von 1 bis 80, vorzugsweise 10 bis 60 und in den meisten Fällen bei 15 bis 40 Gew.-%.

Die oben angegebenen Monomeren werden üblicherweise unter Verwendung radikalbildender Initiatoren polymerisiert, in der Regel in einer Inertgasatmosphäre. Als radikalbildende Initiatoren können Wasserstoffperoxid oder anorganische Persulfate verwendet werden, ebenso organische Verbindungen vom Peroxid-, Peroxyester-, Percarbonat- oder Azotyp, wie z.B. Dibenzoylperoxid, Di-t-butylperoxid, t-Butylhydroperoxid, Dilauroylperoxid, t-Butylperpivalat, t-Amylperpivalat, t-Butylperneodecanoat, 2,2'-Azobis(2-amidinopropan)dihydrochlorid, 4,4'-Azobis(4-cyanovaleriansäure), 2,2'-Azobis[2-(2-imidazolin-2-yl)propan]dihydrochlorid, 2,2'-Azobis(2,4-dimethylvaleronitril), 2,2'-Azobisisobutyronitril, 2,2'-Azobis(2-methylbutyronitril) und Dimethyl-2,2'-azobis(isobutyrat). Man kann selbstverständlich auch Initiatormischungen oder die bekannten Redoxinitiatoren verwenden. Die Initiatoren werden in den üblichen Mengen verwendet, z.B. in Mengen von 0,02 bis 5 Gew.-%, bezogen auf die zu polymerisierenden Monomeren.

Die Polymerisation wird üblicherweise unter einer Inertgasatmosphäre durchgeführt. Die Polymerisation kann beispielsweise in der Art durchgeführt werden, daß man alle Komponenten, die während der Polymerisation anwesend sind, in einem Polymerisationsgefäß vorlegt, die Reaktion startet und das Reaktionsgemisch gegebenenfalls kühlt, um die Polymerisationstemperatur zu kontrollieren. Man kann jedoch auch so vorgehen, daß man nur einzelne oder einen Teil der Komponenten vorlegt, die Polymerisation startet und den Rest der Komponenten einzeln oder zusammen in unterschiedlichen Intervallen je nach Fortschritt der Polymerisation kontinuierlich oder absatzweise zudosiert. Man kann jedoch auch so verfahren, daß man zunächst nur das Verdünnungsmittel vorlegt und die Monomeren und den Polymerisationsinitiator in separaten Zuläufen in die Vorlage absatzweise oder kontinuierlich einbringt.

Die Polymerisation der Monomeren erfolgt im allgemeinen bei Temperaturen von 40 bis 200, vorzugsweise 50 bis 120°C. Die Temperatur kann während der Reaktion nach einem Programm unterschiedlich gesteuert werden. Die Polymerisation wird vorzugsweise unter Atmosphärendruck durchgeführt, kann jedoch auch unter vermindertem oder erhöhtem Druck erfolgen. Sofern die Polymerisationstemperatur oberhalb des Siedepunktes des Reaktionsgemisches liegt, wird die Polymerisation in druckdichten Apparaturen bei Drücken bis zu beispielsweise 16 bar durchgeführt.

Bei der Herstellung vernetzter Copolymerisate entstehen bekanntlich häufig schwer entfernbare Beläge an den Wänden der Reaktionsgefäße sowie an den Rührern. Bei der Herstellung der erfindungsgemäßen Copolymerisate wird die sonst störende Belagbildung praktisch nicht beobachtet.

Die Herstellung von Polymerisaten, die 4-Vinylpyridin-N-oxid (formal) einpolymerisiert enthalten, erfolgt bevorzugt durch Polymerisation oder Copolymerisation von 4-Vinylpyridin und anschließende N-Oxidation des Pyridinrings mit z.B. in situ hergestellter Peressigsäure, vgl. WO-A-94/20549.

Die Polymerisate, die über basische, N-haltige Gruppen verfügen, können im Anschluß an die Reaktion durch ein geeignetes Reagenz in eine quaternierte Form übergeführt werden. Zur Quaternierung eignen sich beispielsweise Alkylhalogenide mit 1 bis 18 Kohlenstoffatomen im Molekül, z.B. Methylchlorid, Ethylchlorid, Propylchlorid, Hexylchlorid, Dodecylchlorid oder Laurylchlorid sowie Benzylhalogenide wie z.B. Benzylchlorid. Selbstverständlich eignen sich auch die entsprechenden Iod- oder Bromverbindungen. Geeignete Quaternierungsmittel sind weiterhin Dialkylsulfate, insbesondere Dimethylsulfat und Diethylsulfat. In manchen Fällen ist es auch ausreichend, die Polymerisate durch Behandlung mit einer Säure in die Salzform überzuführen. Die Quaternierung kann vollständig oder teilweise erfolgen.

Die Reaktionsmischung kann im Anschluß an den Polymerisationsprozeß einer physikalischen oder chemischen Nachbehandlung unterworfen werden. Solche Verfahren sind beispielsweise die bekannten Verfahren zur Restmonomerenreduzierung wie z.B. eine Nachbehandlung durch Zusatz von Polymerisationsinitiatoren oder Mischungen mehrerer Polymerisationsinitiatoren bei geeigneten Temperaturen oder Erhitzen der Polymerisationslösung auf Temperaturen oberhalb der Polymerisationstemperatur, eine Nachbehandlung der Polymerlösung mittels Wasserdampf oder Strippen mit Stickstoff oder Behandeln der Reaktionsmischung mit oxidierenden oder reduzierenden Reagenzien.

Die Polymerisate können aus der Reaktionsmischung beispielsweise mit Hilfe einer Filtration oder durch Zentrifugieren isoliert werden. Die teilchenförmigen, porösen Polymerisate werden mit Wasser gewaschen und anschließend getrocknet. Falls gewünscht, kann das Polymerisat durch Naßmahlung einer Polymersuspension entweder vor oder nach einer Aufarbeitung homogenisiert werden. Eine Vereinheitlichung der Teilchengröße erhält man auch mit Hilfe einer Trockenmahlung des Polymerisats. Um eine Erhöhung der Schüttdichte des trockenen Pulvers zu erreichen, kann das lockere Pulver kompaktiert werden. Der mittlere Durchmesser der Polymerteilchen beträgt beispielsweise 1 bis 1000 um und liegt vorzugsweise in dem Bereich von 1 bis 800 µm. Besonders bevorzugt sind Teilchengrößen von 1 bis 500 µm.

Im Gegensatz zu dem aus dem Stand der Technik bekannten feinteiligen Polymeren gleicher Zusammensetzung weisen die erfindungsgemäßen pulverförmigen N-Vinylimidazol-Einheiten enthaltenden Polymeren eine poröse Oberfläche auf. Dies ist beispielsweise anhand von elektronenmikroskopischen Aufnahmen deutlich zu sehen. Die porösen pulverförmigen N-Vinylimidazol-Einheiten aufweisenden Polymeren haben gegenüber feinteiligen Polymeren gleicher Zusammensetzung und glatter Oberfläche eine bessere Wirksamkeit als Farbübertragungsinhibitor.

Die erfindungsgemäßen pulverförmigen, porösen, N-Vinylimidazol-Einheiten enthaltenden Polymeren werden als Zusatz zu phosphatfreien und phosphatreduzierten Waschmitteln zur Inhibierung der Farbstoffübertragung während des Waschvorgangs verwendet. Diese Polymerisate bewirken beim gemeinsamen Waschen von gefärbten und weißen Textilien eine Inhibierung der Farbstoffübertragung auf nicht oder verschiedenartig gefärbte Textilien.

Die Waschmittel können pulverförmig sein oder auch in flüssiger Einstellung vorliegen. Die Zusammensetzung der Wasch- und Reinigungsmittel kann sehr unterschiedlich sein. Wasch- und Reinigungsmittelformulierungen enthalten üblicherweise 2 bis 50 Gew.-% Tenside und gegebenenfalls Bilder. Diese Angaben gelten sowohl für flüssige als auch für pulverförmige Waschmittel. Wasch- und Reinigungsmittelformulierungen, die in Europa, in den U.S.A. und in Japan gebräuchlich sind, findet man beispielsweise in Chemical and Engn. News, Band 67, 35 (1989) tabellarisch dargestellt. Weitere Angaben über die Zusammensetzung von Wasch- und Reinigungsmitteln können Ullmanns Enzyklopädie der technischen Chemie, Verlag Chemie, Weinheim 1983, 4. Auflage, Seiten 63 bis 160, entnommen werden.

Unter phosphatreduzierten Waschmitteln sollen solche Formulierungen verstanden werden, die höchstens 25 Gew.-% Phosphat enthalten, berechnet als Pentanatriumtriphosphat. Die erfindungsgemäß als Farbübertragungsinhibitor zu verwendenden Copolymerisate werden in den Waschmitteln beispielsweise in Mengen von 0,05 bis 5, vorzugsweise 0,2 bis 2,5 und besonders bevorzugt in Mengen von 0,25 bis 1,5 Gew.-% eingesetzt. Die erfindungsgemäß zu verwendenden Polymerisate werden dabei in pulverförmigen oder granulatförmigen Waschmitteln oder auch in flüssigen Waschmitteln verwendet. Bei den Waschmitteln kann es sich um Vollwaschmittel oder um Spezialwaschmittel handeln. Als Tenside kommen sowohl anionische als auch nichtionische oder Mischungen aus anionischen und nichtionischen Tensiden in Betracht. Der Tensidgehalt der Waschmittel beträgt vorzugsweise 8 bis 30 Gew.-%.

Geeignete anionische Tenside sind beispielsweise Fettalkoholsulfate von Fettalkoholen mit 8 bis 22, vorzugsweise 10 bis 18 Kohlenstoffatomen, z.B. C₉- bis C₁₁-Alkoholsulfate, C₁₂- bis C₁₃-Alkoholsulfate, Cetylsulfat, Myristylsulfat, Palmitylsulfat, Stearylsulfat und Talgfettalkoholsulfat.

Weitere geeignete anionische Tenside sind sulfatierte, ethoxylierte C₈- bis C₂₂-Alkohole bzw. deren lösliche Salze. Verbindungen dieser Art werden beispielsweise dadurch hergestellt, daß man zunächst einen C₈- bis C₂₂-, vorzugsweise einen C₁₀- bis C₁₈-Alkohol alkoxyliert und das Alkoxylierungsprodukt anschließend sulfatiert. Für die Alkoxylierung verwendet man vorzugsweise Ethylenoxid, wobei man pro Mol Fettalkohol 2 bis 50, vorzugsweise 3 bis 20 Mol, Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte C₈- bis C₂₂-Alkohole, die Ethylenoxid und Propylenoxid oder Ethylenoxid und Butylenoxid enthalten. Die alkoxylierten C₈- bis C₂₂-Alkohole können die Ethylenoxid-, Propylenoxid- und Butylenoxideinheiten in Form von Blocken oder in statistischer Verteilung enthalten.

Weitere geeignete anionische Tenside sind Alkylsulfonate wie C₈-bis C₂₄-, vorzugsweise C₁₀-C₁₈-Alkansulfonate sowie Seifen wie beispielsweise die Salze von C₈- bis C₂₄-Carbonsäuren.

Weitere geeignete anionische Tenside sind C-₉- bis C₂₀-linear-Alkylbenzolsulfonate (LAS). Vorzugsweise werden die erfindungsgemäßen Polymeren in LAS-armen Waschmittelformulierungen mit weniger als 4 %, besonders bevorzugt in LAS-freien Formulierungen eingesetzt.

Die anionischen Tenside werden dem Waschmittel vorzugsweise in Form von Salzen zugegeben. Geeignete Kationen in diesen Salzen sind Alkalimetallionen wie Natrium-, Kalium-, Lithium- und Ammoniumionen wie z.B. Hydroxyethylammonium-, Di(hydroxyethyl)ammonium- und Trilhydroxyethyl)ammoniumionen.

Als nichtionische Tenside eignen sich beispielsweise alkoxylierte C₈- bis C₂₂-Alkohole. Die Alkoxylierung kann mit Ethylenoxid, Propylenoxid und/oder Butylenoxid durchgeführt werden. Als Tensid einsetzbar sind hierbei sämtliche alkoxylierten Alkohole, die mindestens zwei Moleküle eines vorstehend genannten Alkylenoxids addiert enthalten. Auch hierbei kommen Blockpolymerisate von Ethylenoxid, Propylenoxid und/oder Butylenoxid in Betracht oder Anlagerungsprodukte, die die genannten Alkylenoxide in statistischer Verteilung enthalten. Pro Mol Alkohol verwendet man 2 bis 5, vorzugsweise 3 bis 20 Mol mindestens eines Alkylenoxids. Vorzugsweise setzt man als Alkylenoxid Ethylenoxid ein. Die Alkohole haben vorzugsweise 10 bis 18 Kohlenstoffatomen.

Eine andere Klasse nichtionischer Tenside sind Alkylpolyglucoside mit 8 bis 22, vorzugsweise 10 bis 18 Kohlenstoffatomen in der Alkylkette. Diese Verbindungen enthalten 1 bis 20, vorzugsweise 1,1 bis 5 Glucosideinheiten.

Eine andere Klasse nichtionischer Tenside sind N-Alkylglucamide der allgemeinen Struktur III bzw. IV 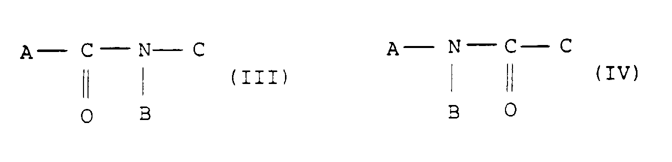 wobei A ein C₆- bis C₂₂-Alkyl, B ein H oder C₁- bis C₄-Alkyl und C ein Polyhydroxyalkyl-Rest mit 5 bis 12 C-Atomen und mindestens 3 Hydroxygruppen ist. Vorzugsweise steht A für C₁₀- bis C₁₈-Alkyl-, B für CH₃- und C für einen C₅ oder C₆-Rest. Beispielsweise erhält man derartige Verbindungen durch die Acylierung von reduzierend aminierten Zuckern mit Säurechloriden von C₁₀-C₁₈-Carbonsäuren. Die Waschmittelformulierungen entnalten vorzugsweise mit 3-12 Mol Ethylenoxid ethoxylierte C₁₀-C₁₆-Alkohole, besonders bevorzugt ethoxylierte Fettalkohole als nichtionische Tenside.

Die pulver- oder granulatförmigen Waschmittel sowie gegebenenfalls auch strukturierte Flüssigwaschmittel enthalten außerdem einen oder mehrere anorganische Builder. Als anorganische Buildersubstanzen eignen sich alle üblichen anorganischen Builder wie Alumosilikate, Silikate, Carbonate und Phosphate.

Geeignete anorganische Builder sind z.B. Alumosilikate mit ionenaustauschenden Eigenschaften wie z.B. Zeolithe. Verschiedene Typen von Zeolithen sind geeignet, insbesondere Zeolith A, X, B, P, MAP und HS in ihrer Na-Form oder in Formen, in denen Na teilweise gegen andere Kationen wie Li, K, Ca, Mg oder Ammonium ausgetauscht sind. Geeignete Zeolithe sind beispielsweise beschrieben in EP-A-0 038 591, EP-A-0 021 491, EP-A-0 087 035, US-A-4 604 224, GB-A-2 013 259, EP-A-0 522 726, EP-A-0 384 070A und WO-A-94/24251.

Weitere geeignete anorganische Builder sind z.B. amorphe oder kristalline Silikate wie z.B. amorphe Disilikate, kristalline Disilikate wie das Schichtsilikat SKS-6 (Hersteller Hoechst). Die Silikate können in Form ihrer Alkali-, Erdalkali- oder Ammoniumsalze eingesetzt werden. Vorzugsweise werden Na-, Li- und Mg-Silikate eingesetzt.

Weitere geeignete anorganische Buildersubstanzen sind Carbonate und Hydrogencarbonate. Diese können in Form ihrer Alkali-, Erdalkali- oder Ammoniumsalze eingesetzt werden. Vorzugsweise werden Na-, Li- und Mg-Carbonate bzw. Hydrogencarbonate, insbesondere Natriumcarbonat und/oder Natriumhydrogencarbonat eingesetzt.

Die anorganischen Builder können in den Waschmitteln in Mengen von 0 bis 60 Gew.-% zusammen mit gegebenenfalls zu verwendenden organischen Cobuildern enthalten sein. Die anorganischen Builder können entweder allein oder in beliebigen Kombinationen miteinander in das Waschmittel eingearbeitet werden. In pulver- oder granulatförmigen Waschmmitteln werden sie in Mengen von 10 bis 60 Gew.-%, vorzugsweise in Mengen von 20 bis 50 Gew.-% zugesetzt, in strukturierten (mehrphasigen) Flüssigwaschmitteln werden anorganische Builder in Mengen bis zu 40 Gew.-%, vorzugsweise bis zu 20 Gew.-% zugesetzt. Sie werden in den flüssigen Formulierungsbestandteilen suspendiert.

Die Waschmittel enthalten vorzugsweise zusätzlich einen oder mehrere organischen Cobuilder. Dabei handeit es sich um niedermolekulare oder polymere Polycarboxylate und/oder Aminopolycarboxylate. Geeignete niedermolekulare Polycarboxylate sind beispielsweise
- C₄- bis C₂₀-Di-, Tri- und Tetracarbonsäuren wie z.B. Bernsteinsäure, Propantricarbonsäure, Butantetracarbonsäure, Cyclopentantetracarbonsäure und Alkyl- und Alkenylbernsteinsäuren mit C₂- bis C₁₆-Alkyl- bzw. Alkenyl-Resten,
- C₄- bis C₂₀-Hydroxycarbonsäuren wie z.B. Äpfelsäure, Weinsäure, Guconsäure, Glucarsäure, Citronensäure, Lactobionsäure und Saccharosemono-, -di-, und -tricarbonsäure und
- Aminopolycarboxylate wie z.B. Nitrilotriessigsäure, Methylglycindiessigsäure, Alanindiessigsäure, Ethylendiamintetraessigsäure und Serindiessigsäure.

Geeignete polymere Polycarboxylate sind beispielsweise
(1) Oligomaleinsäuren, vgl. beispielsweise EP-A-0 451 508, EP-A-0 396 303,
(2) Copolymere ungesättigter C₄- bis C₈-Dicarbonsäuren, wobei als Comonomere
   i) monoethylenisch ungesättigte C₃- bis C₈-Monocarbonsäuren wie z.B. Acrylsäure, Methacrylsäure, Crotonsäure und Vinylessigsäure, bevorzugt Acrylsäure und Methacrylsäure,
   ii) C₂- bis C₂₂-Monoolefine, Vinylalkylether mit C₁- bis C₈-Alkylgruppen, Styrol, Vinylester von C₁-C₈-Carbonsäuren, (Meth)acrylamid und Vinylpyrrolidon, bevorzugt C₂- bis C₆-α-Olefine, Vinylalkylether mit C₁- bis C₄-Alkylgruppen, Vinylacetat und Vinylpropionat,
   iii) (Meth)acrylester von C₁- bis C₈-Alkoholen, (Meth)acrylnitril, (Meth)acrylamide von C₁-C₈-Aminen, N-Vinylformamid und N-Vinylimidazol
   in Betracht Kommen. Als ungesättigte C₄- bis C₈-Dicarbonsäuren sind beispielsweise Maleinsäure, Fumarsäure, Itaconsäure und Citraconsäure geeignet. Bevorzugt ist Maleinsäure. Die Copolymerisate können die Monomeren der Gruppe
   i) in Mengen bis zu 95 %,
   ii) in Mengen bis zu 60 % und
   iii) in Mengen bis zu 20 %
   einpolymerisiert enthalten. Die Copolymeren können Einheiten von 2, 3, 4 oder gegebenenfalls auch 5 verschiedenen Monomeren enthalten.
   Falls die Polymeren der Gruppe ii) Vinylester einpolymerisiert enthalten, können diese auch teilweise oder vollständig zu Vinylalkoholeinheiten hydrolysiert vorliegen. Geeignete Co- und Terpolymere sind beispielsweise aus US-A-3 887 806 sowie DE-A-4 313 909 bekannt.
   Als Copolymere von Dicarbonsäuren eignen sich vorzugsweise
   - Copolymere aus Maleinsäure und Acrylsäure im Gewichtsverhältnis 10:90 bis 95:5, besonders bevorzugt solche im Gewichtsverhältnis 30:70 bis 90:10 und mit Molmassen von 40000 bis 150000,
   - Terpolymere aus Maleinsäure, Acrylsäure und einem Vinylester einer C₁- bis C₃-Carbonsäure im Gewichtsverhältnis 10 (Maleinsäure) : 90 (Acrylsäure + Vinylester) bis 95 (Maleinsäure) : 10 (Acrylsäure + Vinylester), wobei das Gewichtsverhältnis von Acrylsäure zu Vinylester im Bereich von 20:80 bis 80:20 variieren kann, und - besonders bevorzugt -
   - Terpolymere aus Maleinsäure, Acrylsäure und Vinylacetat oder Vinylpropionat im Gewichtsverhältnis 20 (Maleinsäure) : 80 (Acrylsäure + Vinylester) bis 90 (Maleinsäure) : 10 (Acrylsäure + Vinylester), wobei das Gewichtsverhältnis von Acrylsäure zu Vinylester im Bereich von 30:70 bis 70:30 variieren kann, sowie
   - Copolymere von Maleinsäure mit C₂- bis C₆-α-Olefinen im Molverhältnis 40:60 bis 80:20, wobei Copolymere aus Maleinsäure und Ethylen, Propylen oder Isobuten im Molverhältnis 50:50 besonders bevorzugt sind.
(3) Pfropfpolymere ungesättigter Carbonsäuren auf niedermolekulare Kohlehydrate bzw. hydrierte Kohlehydrate, vgl. US-A-5 227 446, DE-A-4 415 623, und DE-A-4 313 909.
   Geeignete ungesättigte Carbonsäuren sind beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden. Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomeren der Gruppen ii) und iii).
   Als Pfropfgrundlage sind abgebaute Polysaccharide wie z.B. saure oder enzymatisch abgebaute Stärken, Inuline oder Zellulose, reduzierte (hydrierte oder hydrierend aminierte) abgebaute Polysaccharide wie z.B. Mannit, Sorbit, Aminosorbit und Glucamin geeignet sowie Polyalkylenglycole mit Molmassen bis zu Mw = 5000 wie z.B. Polyethylenglykole, Ethylenoxid/Propylenoxid bzw. Ethylenoxid/Butylenoxid-Blockcopolymere, statistische Ethylenoxid/Propylenoxid bzw. Ethylenoxid/Butylenoxid-Copolymere, alkoxylierte ein- oder mehrwertige C₁- bis C₂₂-Alkohole, vgl. US-A-4,746,456.
   Bevorzugt werden aus dieser Gruppe gepfropfte abgebaute bzw. abgebaute reduzierte Stärken und gepfropfte Polyethylenoxide eingesetzt, wobei 20 bis 80 Gew.-% Monomere bezogen auf die Pfropfkomponente bei der Pfropfpolymerisation eingesetzt werden. Zur Pfropfung wird vorzugsweise eine Mischung von Maleinsäure und Acrylsäure im Verhältnis von 90:10 bis 10:90 eingesetzt.
(4) Polyglyoxylsäure vgl. beispielsweise EP-B-0 001 004, US-A-5,399,286, DE-A-4 106 355 und EP-A-0 656 914. Die Endgruppen der Polyglyoxylsäuren können unterschiedliche Strukturen aufweisen.
(5) Polyamidocarbonsäuren und modifizierte Polyamidocarbonsäuren vgl. beispielsweise EP-A-0 454 126, EP-B-0 511 037, WO-A-94/01486 und EP-A-0 581 452.
   Vorzugsweise verwendet man Polyasparaginsäure bzw. Cokondensate der Asparaginsäure mit weiteren Aminosäuren, C₄- bis C₂₅-Mono- oder Dicarbonsäuren, C₄- bis C₂₅-Mono- oder Diaminen. Besonders bevorzugt werden in phosphorhaltigen Säuren hergestellte mit C₆-C₂₂-Mono- oder Dicarbonsäuren bzw. mit C₅-C₂₂-Mono- oder Diaminen modifizierte Polyasparaginsäuren eingesetzt.
(6) Kondensationsprodukte der Zitronensäure mit Hydroxycarbonsäuren oder Polyhydroxyverbindungen vgl. z.B. WO-A-93/22362 und WO-A-92/16493. Solche Carboxylgruppen enthaltenden Kondensate haben Molmassen bis zu 10000, vorzugsweise bis zu 5000.

In pulver- oder granuiatförmigen sowie strukturierten flüssigen Waschmittelformulierungen sind organische Cobuilder in Mengen von 0 bis 15 Gew.-%, vorzugsweise in Mengen von 1 bis 8 Gew.-% zusammen mit anorganischen Buildern enthalten. In flüssigen Waschmittelformulierungen sind organische Cobuilder in Mengen von 0 bis 20 Gew.-%, vorzugsweise in Mengen von 1 bis 10 Gew.-%, besonders bevorzugt in Mengen von 1,5 bis 7,5 Gew.-% enthalten. Die pulver- oder granulatförmigen Vollwaschmittel enthalten außerdem ein Bleichsystem bestehend aus mindestens einem Bleichmittel, gegebenenfalls in Kombination mit einem Bleichaktivator und/oder einem Bleichkatalysator.

Geeignete Bleichmittel sind Perborate und Percarbonate in Form ihrer Alkali- insbesondere ihrer Na-Salze. Sie sind in Mengen von 5 bis 30 Gew.-%, vorzugsweise 10 bis 25 Gew.-% in den Formulierungen enthalten. Weitere geeignete Bleichmittel sind anorganische und organische Persäuren in Form ihrer Alkali- oder Magnesiumsalze oder teilweise auch in Form der freien Säuren. Beispiele für geeignete organische Percarbonsäuren bzw. -Salze sind z.B. Mg-Monoperphthalat, Phthalimidopercapronsäure und Dodecan-1,10-dipersäure. Beispiel für ein anorganisches Persäuresalz ist Kaliumperoxomonosulfat (Oxon).

Geeignete Bleichaktivatoren sind z.B.
- Acylimine wie Tetraacetylethylendiamin, Tetraacetylglycoluril, N,N'-Diacetyl-N,N'-dimethylharnstoff und 1,5-Diacetyl-2,4-dioxohexahydro-1,3,5-triazin
- acylierte Lactame wie beispielsweise Acetylcaprolactam, Octanoylcaprolactam und Benzoylcaprolactam
- substituierte Phenolester von Carbonsäuren wie z.B. Na-acetoxybenzolsulfonat, Na-octanoyloxybenzolsulfonat und Na-nonanoyloxybenzolsulfonat
- acylierte Zucker wie z.B. Pentaacetylglucose
- Anthranilderivate wie z.B. 2-Methylanthranil oder 2-Phenylanthranil
- Enolester wie z.B. Isopropenylacetat
- Oximester wie z.B. O-Acetylacetonoxim
- Carbonsäureanhydride, wie z.B. Phthalsäureanhydrid oder Essigsäureanhydrid.

Vorzugsweise werden Tetraacetylethylendiamin und Na-nonanoyloxybenzolsulfonat als Bleichaktivatoren eingesetzt. Die Bleichaktivatoren werden Vollwaschmitteln in Mengen von 0,1 bis 15 Gew.-%, vorzugsweise in Mengen von 1,0 bis 8,0 Gew.-%, besonders bevorzugt in Mengen von 1,5 bis 6,0 Gew.-% zugesetzt.

Geeignete Bleichkatalysatoren sind quaternisierte Imine und Sulfonimine wie sie in US-A-5 360 568, US-A-5 360 569 und EP-A-0 453 003 beschrieben sind und Mn-Komplexe, vgl. z.B. WO-A-94/21777. Falls Bleichkatalysatoren in den Waschmittelformulierungen eingesetzt werden, sind sie darin in Mengen bis zu 1,5 Gew.-%, vorzugsweise bis zu 0,5 Gew.-%, im Falle der sehr aktiven Mangankomplexe in Mengen bis zu 0,1 Gew.% enthalten.

Die Waschmittel enthalten vorzugsweise ein Enzymsystem. Dabei handelt es sich um üblicherweise in Waschmitteln eingesetzte Proteasen, Lipasen, Amylasen sowie Cellulasen. Das Enzymsystem kann auf ein einzelnes der Enzyme beschränkt sein oder eine Kombination verschiedener Enzyme beeinhalten. Von den handelsüblichen Enzymen werden den Waschmitteln in der Regel mengen von 0,1 bis 1,5 Gew.-%, vorzugsweise 0,2 bis 1,0 Gew.-% des konfektionierten Enzyms zugesetzt. Geeignete Proteasen sind z.B. Savinase und Esperase (Hersteller Novo Nordisk). Eine geeignete Lipase ist z.B. Lipolase (Hersteller Novo Nordisk). Eine geeignete Cellulase ist z.B. Celluzym (Hersteller Novo Nordisk).

Die Waschmittel enthalten vorzugsweise Soil-release Polymere und/ oder Vergrauungsinhibitoren. Dabei handelt es sich z.B. um
- Polyester aus Polyethylenoxiden mit Ethylenglykol und/oder Propylenglykol und aromatischen Dicarbonsäuren oder aromatischen und aliphatischen Dicarbonsäuren. Polyester aus einseitig endgruppenverschlossenen Polyethylenoxiden mit zwei- und/ oder mehrwertigen Alkoholen und Dicarbonsäuren. Derartige Polyester sind bekannt, vgl. beispielsweise US-A-3 557 039, GB-A-1 154 730, EP-A-0 185 427, EP-A-0 241 984, EP-A-0 241 985, EP-A-0 272 033 und US-A-5 142 020.

Weitere geeignete Soil-release Polymere sind amphiphile Pfropf-Copolymere von Vinyl- und/oder Acrylester auf Polyalkylenoxiden, vgl. US-A-4 746 456, US-A-4 846 995, DE-A-3 711 299, US-A-4 904 408, US-A-4 846 994 und US-A-4 849 126 oder modifizierte Cellulosen wie z.B. Methylcellulose, Hydroxypropylcellulose oder Carboxymethylcellulose.

Vergrauungsinhibitoren und Soil-release Polymere sind in den Waschmittelformulierungen zu 0 bis 2,5 Gew.-%, vorzugsweise zu 0,2 bis 1,5 Gew.-%, besonders bevorzugt zu 0,3 bis 1,2 Gew.-% enthalten. Bevorzugt eingesetzte Soil-release Polymere sind die aus der US-A-4 746 456 bekannten Pfropfpolymeren von Vinylacetat auf Polyethylenoxid der Molmasse 2500 - 8000 im Gewichtsverhältnis 1,2:1 bis 3,0:1, sowie handelsübliche Polyethylenterephthalat/polyoxyethylenterephthalate der Molmasse 3000 bis 25000 aus Polyethylenoxiden der Molmasse 750 bis 5000 mit Terephthalsäuren und Ethylenoxid und einem Molverhältnis von Polyethylenterephthalat zu Polyoxyethylenterephthalat von 8:1 bis 1:1 und die aus der DE-A-4 403 866 bekannten Blockpolykondensate, die Blöcke aus (a) Ester-Einheiten aus Polyalkylenglykolen einer Molmasse von 500 bis 7500 und aliphatischen Dicarbonsäuren und/ oder Monohydroxymonocarbonsäuren und (b) Ester-Einheiten aus aromatischen Dicarbonsäuren und mehrwertigen Alkoholen enthalten. Diese amphiphilen Blockcopolymerisate haben Molmassen von 1500 bis 25000.

Ein typisches pulver- oder granulatförmiges Vollwaschmittel kann beispielsweise folgende Zusammensetzung aufweisen:
- 3 bis 50, vorzugsweise 8 bis 30 Gew.-% mindestens eines anionischen und/oder nichtionischen Tensids,
- 5 bis 50, vorzugsweise 15 bis 42,5 Gew.-% mindestens eines anorganischen Builders,
- 5 bis 30, vorzugsweise 10 bis 25 Gew.-% eines anorganischen Bleichmittels,
- 0,1 bis 15, vorzugsweise 1 bis 8 Gew.-% eines Bleichaktivators,
- 0 bis 1, vorzugsweise Bis nöchstens 0,5 Gew.-% eines Bleich-Katalysators,
- 0,05 bis 5 Gew.-%, vorzugsweise 0,2 bis 2,5 Gew.-% eines erfindungsgemäßen Polymers als Farbübertragungsinhibitor,
- 1,5 bis 20, vorzugsweise 2,5 bis 8 Gew.-% mindestens eines organischen Cobuilders,
- 0,2 bis 1,0 Gew.-% Protease,
- 0,2 bis 1,0 Gew.-% Lipase,
- 0,3 bis 1,5 Gew.-% eines Soil-release Polymers.

In farbscbonenden Spezialwaschmitteln (beispielsweise sogenannten Colorwaschmitteln) wird oft auf ein Bleichsystem vollständig oder teilweise verzichtet. Ein typisches pulver- oder granulatförmiges Colorwaschmittel kann beispielsweise folgende Zusammensetzung aufweisen:
- 3 bis 50, vorzugsweise 8 bis 30 Gew.-% mindestens eines anionischen und/oder nichtionischen Tensids,
- 10 bis 60, vorzugsweise 20 bis 55 Gew.-% mindestens eines anorganischen Builders,
- 0 bis 15, vorzugsweise 0 bis 5 Gew.-% eines anorganischen Bleichmittels,
- 0,05 bis 5 Gew.-%, vorzugsweise 0,2 bis 2,5 Gew.-% eines erfindungsgemäßen Polymers als Farbübertragungsinhibitor,
- 0 bis 20, vorzugsweise 1 bis 8 Gew.-% mindestens eines organischen Cobuilders.
- 0,2 bis 1,0 Gew.-% Protease,
- 0,2 bis 1,0 Gew.-% Cellulase,
- 0,2 bis 1,5 Gew.-% eines Soil-release Polymers, z.B. einem Pfropfpolymerisats von Vinylacetat auf Polyethylenglykol.

Die pulver- oder granulatförmigen Waschmittel können bis zu 60 Gew.-% an anorganischen Stellmitteln enthalten. Üblicherweise wird hierfür Natriumsulfat verwendet. Vorzugsweise sind die erfindungsgemäßen Waschmittel aber arm an Stellmitteln und enthalten bis zu 20 Gew.-%, besonders bevorzugt bis zu 8 Gew.-% an Stellmitteln.

Die erfindungsgemäßen waschmittel können unterschiedliche Schüttdichten im Bereich von 300 bis 950 g/l besitzen. Moderne Kompaktwaschmittel besitzen in der Regel hohe Schüttdichten und zeigen einen Granulataufbau.

Die erfindungsgemäßen flüssigen Waschmittel enthalten beispielsweise
- 5 bis 60, vorzugsweise 10 bis 40 Gew.-% mindestens eines anionischen und/oder nichtionischen Tensids,
- 0,05 bis 5 Gew.-%, vorzugsweise 0,2 bis 2,5 Gew.-% eines erfindungsgemäßen pulverförmigen, porösen Polymers als Farbübertragungsinhibitor,
- 0 bis 20, vorzugsweise 1 bis 8 Gew.-% mindestens eines Polycarboxylats und/oder Citronensäure,
- 0 bis 1,0 Gew.-% Protease,
- 0 bis 1,0 Gew.-% Cellulase,
- 0 bis 1,5 Gew.-% eines Soil-release Polymers und/oder Vergrauungsinhibitors,
- 0 bis 60 Gew.-% Wasser,
- 0 bis 10 Gew.-% Alkohole, Glykole wie Ethylenglykol, Diethylenglykol oder Propylenglykol oder Glycerin.

Die Waschmittel können gegebenenfalls weitere übliche Zusätze enthalten. Als weitere Zusätze können gegebenenfalls z.B. Stellmittel, Komplexbildner, Phosphonate, optische Aufheller, Farbstoffe, Parfümöle, Schaumdämpfer und Korrosionsinhibitoren enthalten sein.

Die Prozentangaben in den Beispielen bedeuten Gew.-%, sofern nichts anderes daraus hervorgeht.

### Beispiele

### Beispiel 1

In einem 2 l fassenden Kolben, der mit einem Rührer, Rückflußkühler, Thermometer und einer Apparatur für das Arbeiten unter Schutzgas ausgestattet war, wurden 480 g wasser, 53 g Natriumsulfat, 8 g eines C₁₃-C₁₅-Oxoalkohols, der mit 7 Einheiten Ethylenoxid je Molekül umgesetzt worden war, 40 g N-Vinylimidazol, 40 g N-Vinylpyrrolidon, 10 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur eine Stunde gerührt. Nach 1,5 Stunden fällt ein feinkörniges Produkt an. Nach fünfstündigem Rühren bei hoher Drehzahl läßt man den Ansatz abkühlen, filtriert das Polymerisat ab und wäscht anschließend zweimal mit je 2 1 Wasser nach. Man erhält nach der Trocknung bei 95°C im Vakuumtrockenschrank 77,1 g eines gelblich feinen porösen Pulvers mit einer mittleren Teilchengröße von 450 µm.

### Beispiel 2

In einem 2 l fassenden Kolben, der mit einem Rührer, Rückflußkühler, Thermometer und einer Apparatur für das Arbeiten unter Schutzgas ausgestattet war, wurden 480 g Wasser, 53 g Natriumsulfat, 16 g eines Nonylphenols, das mit 8 Einheiten Ethylenoxid je Molekül umgesetzt worden war, 40 g N-Vinylimidazol, 40 g N-Vinylpyrrolidon, 10 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 6 Stunden gerührt. Es wird wie in Beispiel 1 beschrieben aufgearbeitet. Man erhält nach der Trocknung bei 95°C im Vakuumtrockenschrank 82 g eines gelblich feinen porösen Pulvers mit einer mittleren Teilchengröße von 200 µm.

### Beispiel 3

In einem 2 l fassenden Kolben, der mit einem Rührer, Rückflußkühler, Thermometer und einer Apparatur für das Arbeiten unter Schutzgas ausgestattet war, wurden 480 g Wasser, 53 g Natriumsulfat, 4 g eines Nonylphenols, das mit 8 Einheiten Ethylenoxid je Molekül umgesetzt worden war, 40 g N-Vinylimidazol, 40 g N-Vinylpyrrolidon, 10 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 6 Stunden gerührt. Es wird wie in Beispiel 1 beschrieben aufgearbeitet. Man erhält nach der Trocknung bei 95°C im Vakuumtrockenschrank 82,7 g eines beigefarbenen, porösen Pulvers mit einer mittleren Teilchengröße von 300 µm.

### Beispiel 4

In einem 2 l fassenden Kolben, der mit Rührer, Rückflußkühler, Thermometer und einer Apparatur für das Arbeiten unter Schutzgas ausgestattet war, wurden 480 g Wasser, 5 g Natriumsulfat, 32 g eines Nonylphenols, das mit 10 Einheiten Ethylenoxid je Molekül umgesetzt worden war, 60 g N-Vinylimidazol, 20 g N-Vinylpyrrolidon, 4 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 5 Stunden lang polymerisiert. Es wurden durch Filtration, zweimaligem Nachwaschen mit insgesamt 2 l Wasser und anschließender Trocknung bei 80°C im Vakuumtrockenschrank 71 g eines sehr feinteiligen, beige gefärbten porösen Pulvers mit einer mittleren Teilchengröße von 350 µm isoliert.

### Beispiel 5

In einem 2 l fassenen Kolben, der mit Rührer, Rückflußkühler, Thermometer und einer Apparatur für das Arbeiten unter Schutzgas ausgestattet war, wurden 500 g Wasser, 12 g Natriumcarbonat, 45 g eines Nonylphenols, das mit 8 Einheiten Ethylenoxid je Molekül umgesetzt worden war, 60 g N-Vinylimidazol, 20 g N-Vinylpyrrolidon, 12 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 5 Stunden lang polymerisiert. Es wurden durch Filtration, zweimaligem Nachwaschen mit insgesamt 2 l Wasser und anschließender Trocknung bei 80°C im Vakuumtrockenschrank 76 g eines beige gefärbten porösen Pulvers mit einer mittleren Teilchengröße von 260 µm isoliert.

### Beispiel 6

In einem 2 l fassenden Kolben, der mit Rührer, Rückflußkühler, Thermometer und einer Apparatur für das Arbeiten unter Schutzgas ausgestattet war, wurden 490 g Wasser, 15 g eines C₁₃-C₁₅-Oxoalkohols, der mit 7 Einheiten Ethylenoxid je Molekül umgesetzt worden war, 47 g Natriumcarbonat, 30 g N-Vinylimidazol, 90 g N-Vinylpyrrolidon, 10 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 5 Stunden lang polymerisiert. Es wurden durch Filtration, zweimaligem Nachwaschen mit insgesamt 2 l Wasser und anschließender Trocknung bei 80°C im Vakuumtrockenschrank 113 g eines sehr feinteiligen, weißen porösen Pulvers mit einer mittleren Teilchengröße von 295 µm isoliert.

### Beispiel 7

In einem 2 l fassenden Kolben, der mit Rührer, Rückflußkühler, Thermometer und einer Apparatur für das Arbeiten unter Schutzgas ausgestattet war, wurden 530 g Wasser, 8 g eines C₁₃-C₁₅-Oxoalkohols, der mit 11 Einheiten Ethylenoxid je Molekül umgesetzt worden war, 15 g Natriumcarbonat, 20 g N-Vinylimidazol, 85 g N-Vinylpyrrolidon, 12 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 5 Stunden lang polymerisiert. Es wurden durch Filtration, zweimaligem Nachwaschen mit insgesamt 2 l wasser und anschließender Trocknung bei 80°C im Vakuumtrockenschrank 103 g eines weißen porösen Pulvers mit einer mittleren Teilchengröße von 305 µm isoliert.

### Vergleichsbeispiel 1

In einem 2 l fassenden Kolben, der mit einem Rührer, Rückflußkühler, Thermometer und einer Apparatur für das Arbeiten unter Schutzgas ausgestattet war, wurden 480 g Wasser, 40 g N-Vinylimidazol, 40 g N-Vinylpyrrolidon, 0,4 g N,N'-Divinylethylenharnstoff und 0,8 g 2,2'-Azobis(2-amidinopropan)dihydrochlorid unter Rühren auf 80°C aufgeheizt. Der Ansatz wurde bei dieser Temperatur 5 Stunden lang polymerisiert. Es bildete sich lediglich ein Gel, das nicht aufgearbeitet wurde.

### Vergleichsbeispiel 2

Beispiel 1 der US 3 689 439 wurde nachgearbeitet, indem man in einem 2 l fassenden Kolben, der mit einem Rührer, Rückflußkühler, Thermometer und einer Apparatur für das Arbeiten unter Schutzgas ausgestattet war, 480 g Wasser, 80 g Natriumsulfat, 0,92 g NaH2PO4-Lösung (10 gew.-%ig), 40 g N-Vinylimidazol, 40 g N-Vinylpyrrolidon, 3,2 g Methylenbisacrylamid, 0,24 g 2,2'-Azobis-(2-methyl-propionsäurenitril) unter Rühren auf 65°C aufheizte. Nach 4 stündigem Rühren wurde eine Lösung bestehend aus 0,08 g 2,2'-Azobis-(2-methyl-propionsäurenitril), 0,8 g Methylenbisacrylamid, 20 g Ethanol und 20 g wasser unter Stickstoff zugegeben. Es wurde weitere zwei Stunden bei 65°C gerührt. Anschließend wurde filtriert und der Rückstand mit Wasser nachgewaschen. Nach dem Trocknen im Vakuumtrockenschrank erhielt man 79,4 g eines beigefarbenen, grobkörnigen Pulvers, das anschließend in einer Labormühle zerkleinert wurde.

Rasterelektronenmikroskopische Aufnahmen des Polymerpulvers zeigen im Vergleich zu den gemäß den Beispielen 1-7 erhaltenen Copolymerisaten eine glatte Oberfläche.

Um die Anwendung von pulverförmigen, porösen, N-Vinylimidazol-Einheiten einpolymerisiert enthaltenden vernetzten Polymerisaten als Farbstoffübertragungsinhibitor in Waschmitteln zu erläutern, wurden die Waschmittelzusammensetzungen I bis XII hergestellt, wobei In allen Formulierungen als Farbstoffübertragungsinhibitor Copolymere gemäß den Beispielen 1-3 und das Copolymer gemäß Vergleichsbeispiel 2 verwendet wurden. Um den Einfluß der verschiedenen Korngrößenverteilungen auszuschalten, wurden von den Copolymeren gemäß den Beispielen 1-3 bzw. gemäß Vergleichsbeispiel 2 die Siebfraktionen < 63 µm verwendet. Die Waschmittelformulierungen I bis VI sind farbschonende Vollwaschmittel. Die einzelnen Bestandteile sind in Tabelle 1 angegeben.

Die Abkürzungen, die in den Tabellen 1 und 2 benutzt werden, haben folgende Bedeutung:
- TAED:: Tetraacetylethylendiamin
- NOBS:: Nonanoyloxybenzolsulfonsäure-Na-Salz
- 2-Phenylanthranil:: 2-Phenyl-benz-(4H)-1,3-oxazin-4-on
- SKS-6:: Schichtsilikat-Na-Salz (Hersteller Fa. Hoechst)
- EO:: Ethylenoxid
- Copolymer 1:: Acrylsäure/Maleinsäure-Copolymer im Gewichtsverhältnis 70:30 mit Molmasse Mw = 70000
- Copolymer 2:: Acrylsäure/Maleinsäure-Copolymer im Gewichtsverhältnis 40:60 mit Molmasse Mw = 10000
- Copolymer 3:: Acrylsäure/Maleinsäure/Vinylacetat-Terpolymer im Molverhältnis 40:10:50 mit Molmasse Mw = 20000
- Soil-release Polymer 1:: Pfropfpolymerisat von Vinylacetat auf Polyethylenglykol der Molmasse 6000, Molmasse des Pfropfpolymerisats 24000
- Soil-release Polymer 2:: Polyester mit Einheiten von Polyethylenterephthalat und Polyoxyethylenterephthalat im Molverhältnis 2:3, Molmasse des einkondensierten Polyethylenglykols 4000

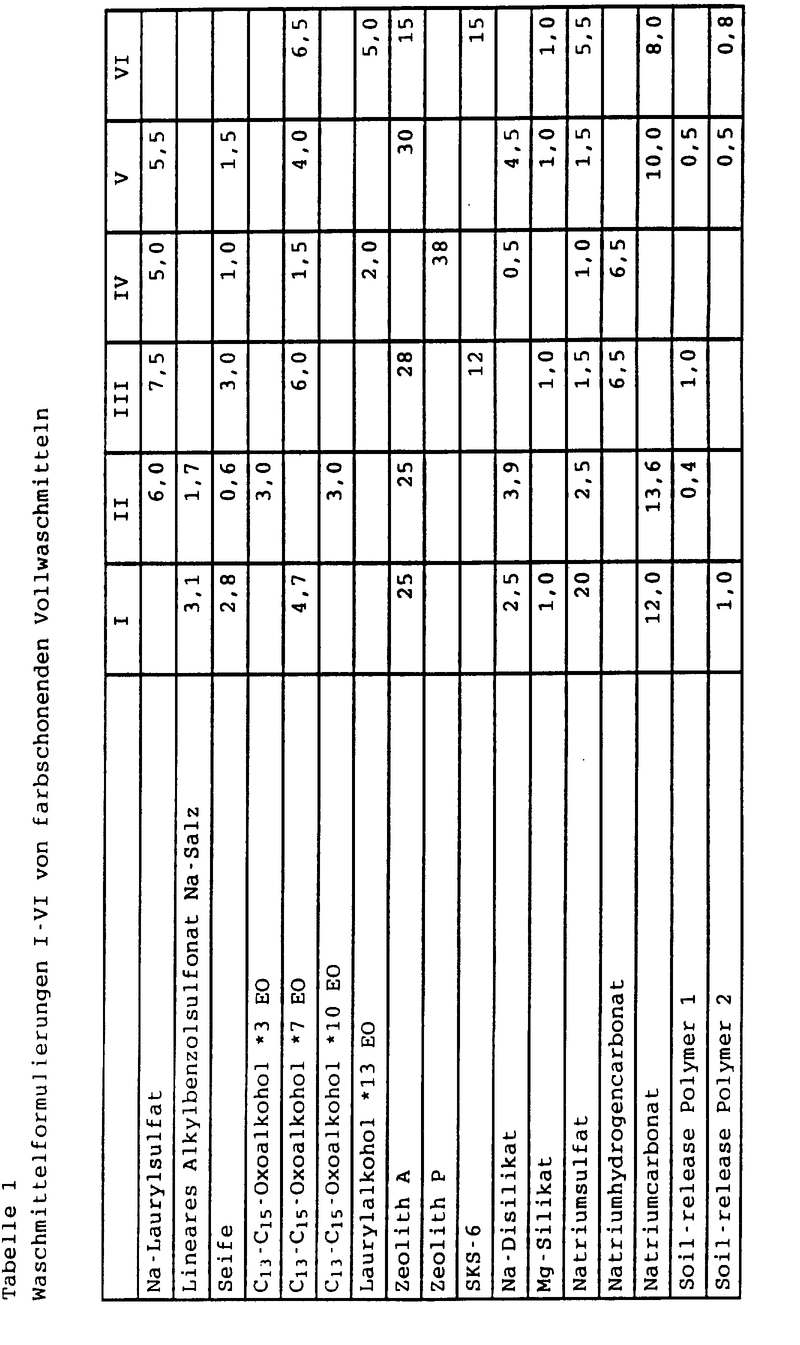

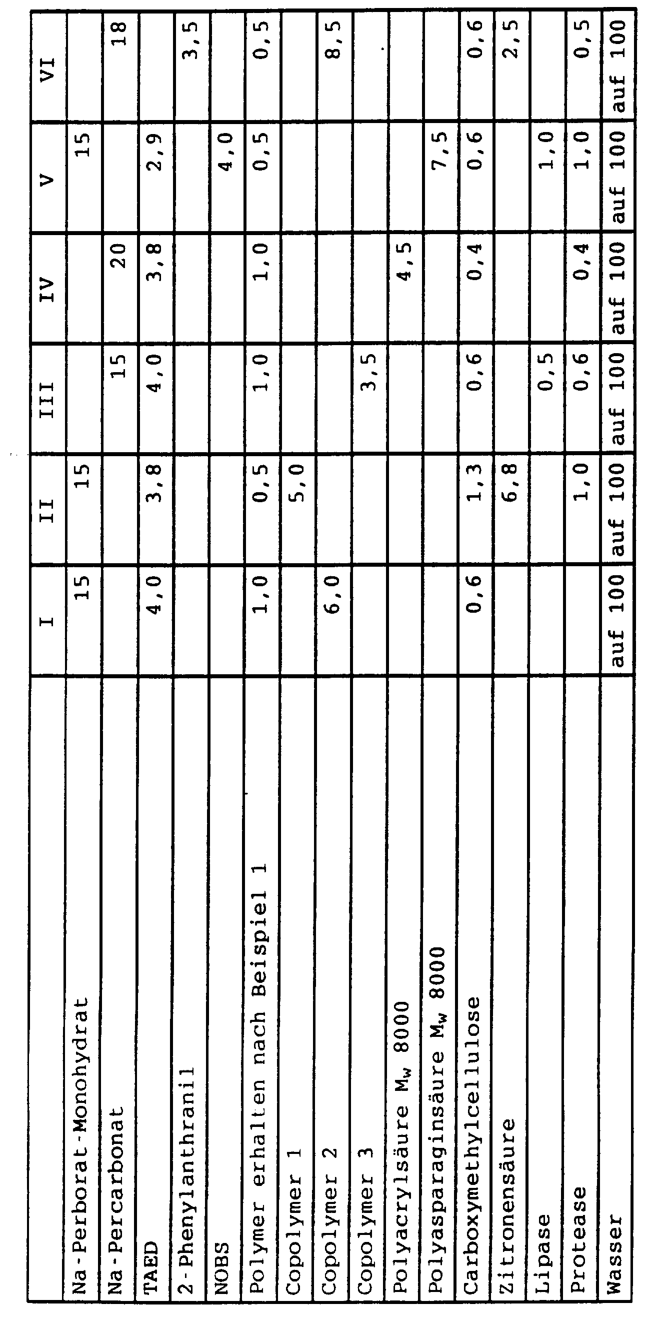

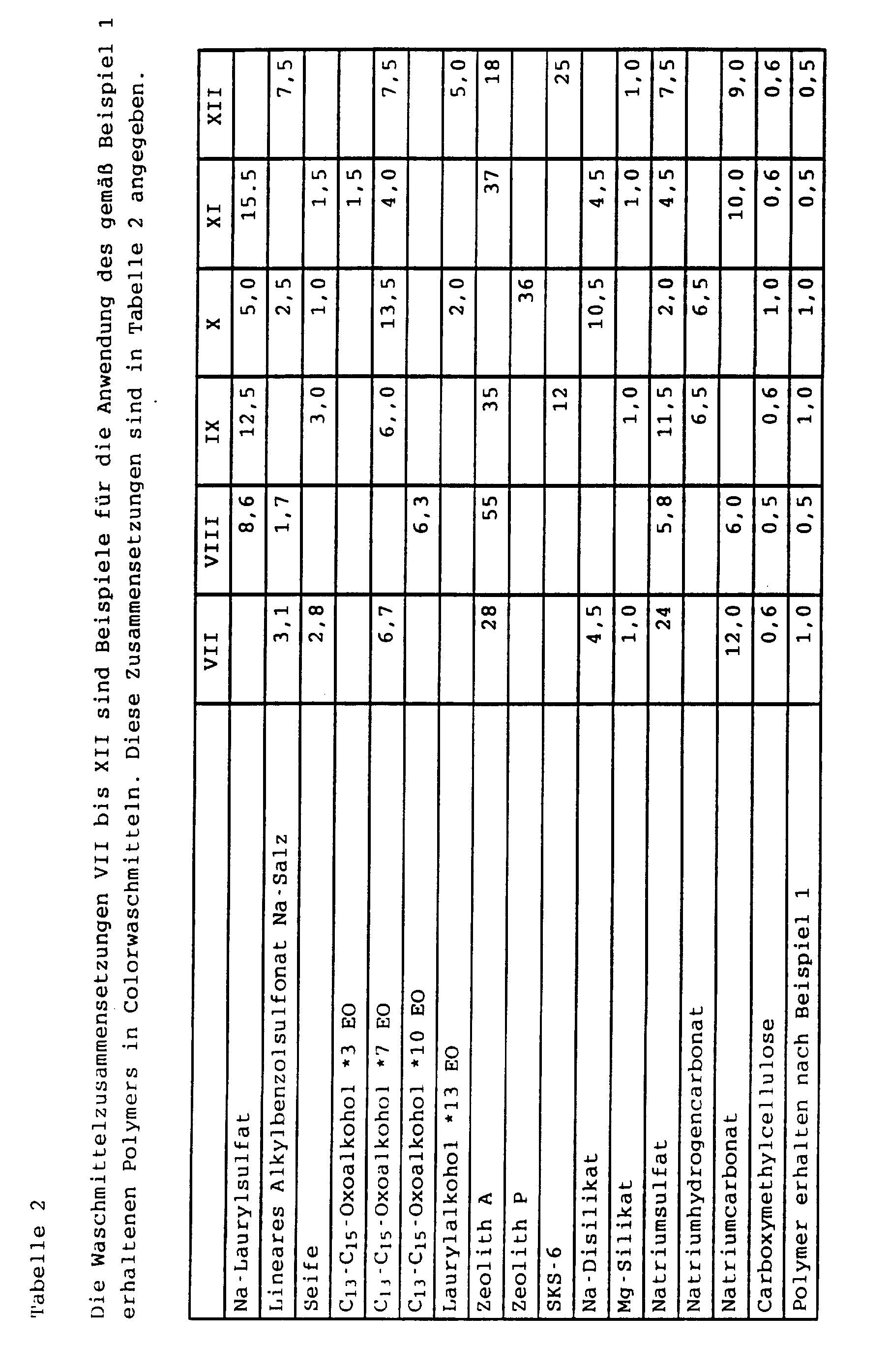

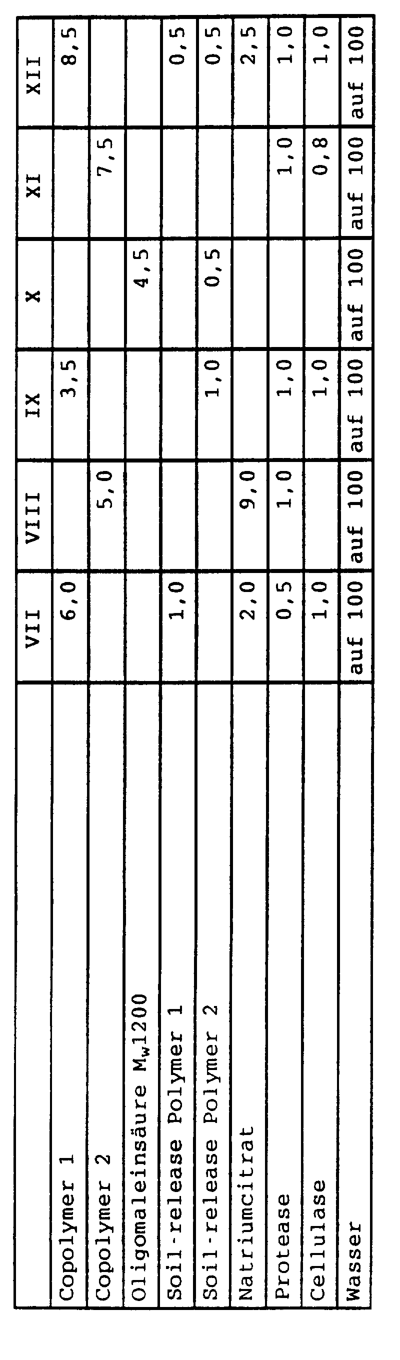

Bei der Prüfung der Waschmittelzusammensetzungen I bis XII auf Farbstoffübertragungsinhibierung während des Waschvorgangs nach der ersten angegebenen Prüfmethode wurden bei verschiedenen Farbstoffen (Direkt- und Reaktivfarbstoffe) Waschergebnisse erhalten, die wesentlich besser waren als bei Verwendung von Polyvinylpyrrolidon einer Molmasse von 40000 als Farbstoffübertragungsinhibitor.

Prüfmethode zur Bestimmung der Wirksamkeit von Farbstoffübertragungsinhibitoren:

Weißes Baumwoll-Prüfgewebe wurde unter den in Tabelle 3 genannten Waschbedingungen und unter Zusatz des Waschmittels gemäß Tabelle 4 in Gegenwart von gefärbten Baumwollgeweben gewaschen. Der Farbstoff wurde während des Waschvorgangs von den Baumwolltestfärbungen abgelöst.

Tabelle 3 enthält die Waschbedingungen für die Beispiele. Die Zusammensetzung des verwendeten Waschmittels ist in Tabelle 4 angegeben. Die Messung der Anfärbung des Prüfgewebes erfolgte photometrisch. Aus den an den einzelnen Prüfgeweben gemessenen Remissionswerten wurden nach dem in A. Kud, Seifen, Öle, Fette Wachse, Band 119, S. 590-594 (1993) beschriebenen Verfahren die jeweiligen Farbstärken der Anfärbungen bestimmt. Aus den Farbstärken für den Versuch mit der jeweiligen Prüfsubstanz, der Farbstärke für den Versuch ohne Prüfsubstanz und der Farbstärke des Prüfgewebes vor der Wäsche wird nach dem in o.g. Literaturstelle beschriebenen Verfahren die farbübertragungsinhibierende Wirkung der Prüfsubstanz in % ermittelt (Farbübertragungsinhibierung wird dabei analog zur Vergrauungsinhibierung behandelt). Die Wirksamkeiten sind in Tabelle 5 für drei verschiedene Farbstoffe aufgeführt.

**Tabelle 3**

| Waschbedingungen | |
|---|---|
| Gerät | Launder-O-meter |
| Zyklen | 1 |
| Dauer | 30 min |
| Temperatur | 60°C |
| Wasserhärte | 3 mmol/l |
| Farbstoffeintrag | Farbgewebe |
| Prüfgewebe | 2,5 g Baumwollnessel (gebleicht) |
| Flottenmenge | 250 ml |
| Waschmittelkonzentration | 4,5 g/l |

**Tabelle 4**

| Waschmittelzusammensetzung | |
|---|---|
| Inhaltsstoffe | Menge [Gew.-%] |
| Lineares C_{10/13}-Alkylbenzolsulfonat-Na-Salz (50 %ig) | 8,6 |
| Fettalkoholsulfat-Na-Salz | 2,7 |
| Additionsprodukt von 10 mol Ethylenoxid an 1 mol C₁₃/₁₅-Oxoalkohol | 6,3 |
| Zeolith A | 55 |
| Na-citrat · 5,5 H₂O | 9,0 |
| Copolymerisat aus 70 Gew.-% Acrylsäure und 30 Gew.-% Maleinsäure, Molmasse 70000 | 4,0 |
| Na-carbonat | 6,0 |
| Na-sulfat | 5,8 |
| Carboxymethylcellulose | 0,5 |
| Polymer (Farbstoffübertragungsinhibitor | 1,0 |

Die Waschergebnisse mit den erfindungsgemäßen Polymeren gemäß den Beispielen 1-3 sind in Tabelle 5 wiedergegeben.

**Tabelle 5:**

| Farbübertragungsinhibierende Wirkung in % | | | |
|---|---|---|---|
| Polymer hergestellt nach | Direkt Orange 39 | Direkt Schwarz 22 | Direkt Schwarz 51 |
| Beispiel 1 | 57,4 | 58,3 | 65,4 |
| Beispiel 2 | 53,7 | 49,8 | 58,0 |
| Beispiel 3 | 52,3 | 66,9 | 66,2 |
| Polyvinylpyrrolidon mit K-Wert 30 | 11,2 | 50,1 | 11,6 |
| Vergleichsbeispiel 2 | 20,1 | 47,5 | 34,7 |

Die Waschergebnisse der Tabelle 5 zeigen, daß die erfindungsgemäßen Polymeren sehr gute Wirksamkeit als Farbübertragungsinhibitoren besitzen und den in Waschmitteln vielfach eingesetzten Farbübertragungsinhibitor Polyvinylpyrrolidon (Vergleichsbeispiel; K-Wert-Messung nach H. Fikentscher in wäßriger Lösung bei 25°C und einer Polymerkonzentration von 1 %) in vielen Fällen deutlich übertreffen. Die Ergebnisse zeigen außerdem, daß der farbübertragungsinhibierende Effekt bei vielen Farbstoffen auftritt und nicht auf einzelne Farbstoffe beschränkt ist.

## Patentansprüche

1. Pulverförmige, poröse, N-Vinylimidazol-Einheiten enthaltende Polymere, dadurch gekennzeichnet, daß sie erhältlich sind durch radikalisch initiierte Polymerisation nach Art einer Fällungspolymerisation von
a) 5 bis 100 Gew.-% mindestens eines N-Vinylimidazols der Formel 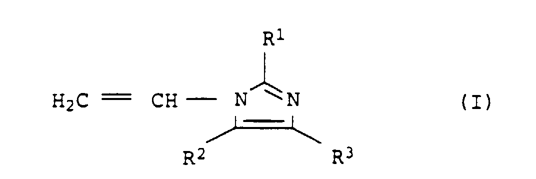 in der R¹, R² und R³ gleich oder verschieden sind und für H, C₁- bis C₄-Alkyl stehen,
Monomere der Formel 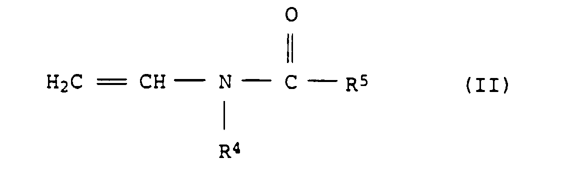 in der R⁴ und R⁵ gleich oder verschieden sind und für H, C₁- bis C₄-Alkyl stehen oder einen Ring aus 3 bis 5 Methylengruppen miteinander bilden, N-Vinyloxazolidon, N-Vinyltriazol, 4-Vinylpyridin-N-oxid oder Mischungen der genannten Monomeren,
b) 0 bis 95 Gew.-% anderen copolymerisierbaren, monoethylenisch ungesättigten Monomeren und
c) 0 bis 50 Gew.-% mindestens eines Monomeren mit mindestens zwei ethylenisch ungesättigten, nichtkonjugierten Doppelbindungen
in wäßriger Lösung, die 0,5 bis 30 Gew.-% mindestens eines Elektrolyten und, bezogen auf die eingesetzten Monomeren, 0,5 bis 80 Gew.-% mindestens eines Tensids enthält.

2. Pulverförmige, poröse, N-Vinylimidazol-Einheiten enthaltende Polymere nach Anspruch 1, dadurch gekennzeichnet, daß man bei der Polymerisation als Monomere
a) N-Vinylimidazol oder Mischungen aus N-Vinylimidazol und N-Vinylpyrrolidon und
b) mindestens ein Monomer mit mindestens zwei ethylenisch ungesättigten, nichtkonjugierten Doppelbindungen
einsetzt.

3. Pulverförmige, poröse, N-Vinylimidazol-Einheiten enthaltende Polymere nach Anspruch 1 oder 2, dadurch gekennzeichnet, daß man als Elektrolyte Alkalimetall-, Erdalkalimetall-, Ammonium- oder Aluminiumsalze oder Mischungen solcher Salze einsetzt.

4. Verfahren zur Herstellung von pulverförmigen, porösen, N-Vinylimidazol-Einheiten enthaltenden Polymeren nach Anspruch 1, dadurch gekennzeichnet, daß man
a) 5 bis 100 Gew.-% mindestens eines N-Vinylimidazols der Formel 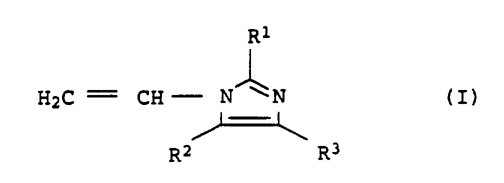 in der R¹, R² und R³ gleich oder verschieden sind und für H, C₁- bis C₄-Alkyl stehen,
Monomere der Formel 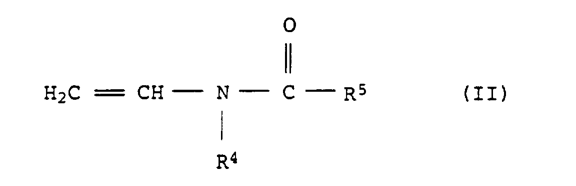 in der R⁴ und R⁵ gleich oder verschieden sind und für H, C₁- bis C₄-Alkyl stehen oder einen Ring aus 3 bis 5 Methylengruppen miteinander bilden, N-Vinyloxazolidon, N-Vinyltriazol, 4-Vinylpyridin-N-oxid oder Mischung der genannten Monomeren,
b) 0 bis 95 Gew.-% anderen copolymerisierbaren, monoethylenisch ungesättigten Monomeren und
c) 0 bis 50 Gew.-% mindestens eines Monomeren mit mindestens zwei ethylenisch ungesättigten, nichtkonjugierten Doppelbindungen
nach Art einer Fällungspolymerisation in Gegenwart von Radikale bildenden Initiatoren in wäßrigen Lösungen polymerisiert, die 0,5 bis 30 Gew.-% mindestens eines Elektrolyten und, bezogen auf die eingesetzten Monomeren, 0,5 bis 80 Gew.-% mindestens eines Tensids enthalten.

5. Verfahren nach Anspruch 4, dadurch gekennzeichnet, daß man die Polymerisation in wäßrigen Lösungen durchführt, die 1 bis 25 Gew.-% eines Elektrolyten aus der Gruppe Natriumsulfat, Natriumcarbonat, Natriumhydrogencarbonat oder deren Mischungen enthalten.

6. Verfahren nach Anspruch 4 oder 5, dadurch gekennzeichnet, daß man als Tenside die Additionsprodukte von Ethylenoxid und/ oder Propylenoxid an C₁₀- bis C₃₀-Alkohole, C₁- bis C₁₈-Alkylphenole, mindestens 12 C-Atome enthaltende Fettamine, mindestens 10 C-Atome enthaltende Fettsäuren, Saccharoseester, Sorbitanester, (Poly)Glycerinester oder Alkyl(poly)glykoside mit 8 bis 22 C-Atomen in der Alkylkette oder Gemischen der genannten Verbindungen einsetzt.

7. Verfahren nach einem der Ansprüche 4 bis 6, dadurch gekennzeichnet, daß man die Tenside in Mengen von 1 bis 60 Gew.-% einsetzt.

8. Verwendung der pulverförmigen, porösen, N-Vinylimidazol-Einheiten enthaltenden Polymeren nach Anspruch 1 als Zusatz zu phosphatfreien und phosphatreduzierten Waschmitteln zur Inhibierung der Farbstoffübertragung während des Waschvorgangs.

## Claims

1. A porous polymer which is in powder form and contains N-vinylimidazole units, which is obtainable by free-radical precipitation polymerization of
a) 5 - 100% by weight of at least one N-vinylimidazole of the formula 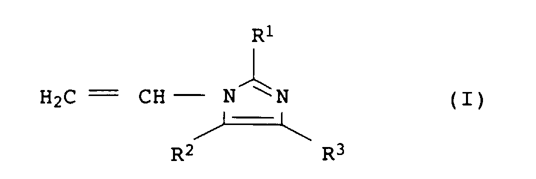 where R¹, R² and R³ are identical or different and are H, C₁-C₄-alkyl,
monomers of the formula 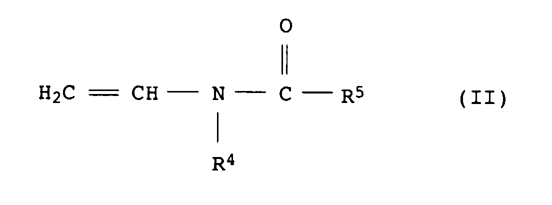 where R⁴ and R⁵ are identical or different and are H, C₁-C₄-alkyl, or together form a ring of 3 to 5 methylene groups, N-vinyloxazolidone, N-vinyltriazole, 4-vinylpyridine N-oxide or mixtures of said monomers,
b) 0 - 95% by weight of other copolymerizable monoethylenically unsaturated monomers and
c) 0 - 50% by weight of at least one monomer with at least two non-conjugated ethylenic double bonds
in aqueous solution which contains 0.5 - 30% by weight of at least one electrolyte and, based on the monomers employed, 0.5 - 80% by weight of at least one surfactant.

2. A porous polymer which is in powder form and contains N-vinylimidazole units as claimed in claim 1, wherein the monomers employed in the polymerization are
a) N-vinylimidazole or mixtures of N-vinylimidazole and N-vinylpyrrolidone and
b) at least one monomer with at least two non-conjugated ethylenic double bonds.

3. A porous polymer which is in powder form and contains N-vinylimidazole units as claimed in claim 1 or 2, wherein alkali metal, alkaline earth metal, ammonium or aluminum salts or mixtures of such salts are employed as electrolytes.

4. A process for preparing a porous polymer which is in powder form and contains N-vinylimidazole units as claimed in claim 1, which comprises polymerizing
a) 5 - 100% by weight of at least one N-vinylimidazole of the formula 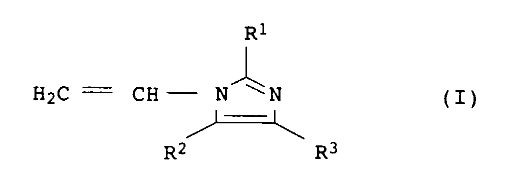 where R¹, R² and R³ are identical or different and are H, C₁-C₄-alkyl,
monomers of the formula 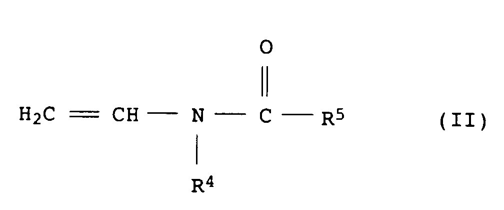 where R⁴ and R⁵ are identical or different and are H, C₁-C₄-alkyl, or together form a ring of 3 to 5 methylene groups, N-vinyloxazolidone, N-vinyltriazole, 4-vinylpyridine N-oxide or mixtures of said monomers,
b) 0 - 95% by weight of other copolymerizable monoethylenically unsaturated monomers and
c) 0 - 50% by weight of at least one monomer with at least two non-conjugated ethylenic double bonds
in a precipitation polymerization in the presence of free-radical initiators in aqueous solutions which contain 0.5 - 30% by weight of at least one electrolyte and, based on the monomers employed, 0.5 - 80% by weight of at least one surfactant.

5. A process as claimed in claim 4, wherein the polymerization is carried out in aqueous solutions which contain 1 - 25% by weight of an electrolyte from the group consisting of sodium sulfate, sodium carbonate, sodium bicarbonate or mixtures thereof.

6. A process as claimed in claim 4 or 5, wherein adducts of ethylene oxide and/or propylene oxide with C₁₀-C₃₀-alcohols, C₁-C₁₈-alkylphenols, fatty amines containing at least 12 carbon atoms, fatty acids containing at least 10 carbon atoms, sucrose esters, sorbitan esters, (poly)glycerol esters or alkyl (poly)glycosides with 8 - 22 carbon atoms in the alkyl chain, or mixtures of said compounds, are employed as surfactants.

7. A process as claimed in any of claims 4 to 6, wherein the surfactants are employed in amounts of from 1 to 60% by weight.

8. The use of the porous polymer which is in powder form and contains N-vinylimidazole units as claimed in claim 1 as additive to phosphate-free and reduced phosphate detergents for inhibiting dye transfer during the washing process.

## Revendications

1. Polymères poreux et sous forme de poudre contenant des motifs N-vinylimidazole, caractérisés en ce qu'ils peuvent être obtenus par polymérisation à amorçage radicalaire selon le procédé de polymérisation par précipitation de
a) 5 à 100% en poids d'au moins un N-vinylimidazole de formule 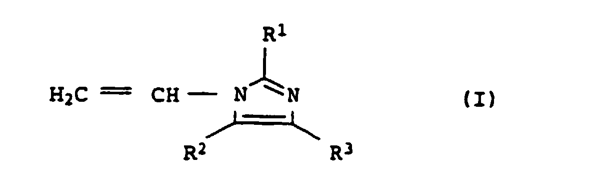 dans laquelle R¹, R² et R³ sont identiques ou différents et sont mis pour H, un groupement alkyle en C₁-C₄,
de monomères de formule 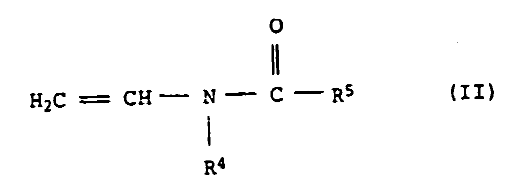 dans laquelle R⁴ et R⁵ sont identiques ou différents et sont mis pour H, un groupement alkyle en C₁-C₄ ou forment ensemble un cycle à 3-5 groupements méthylène, un groupement N-vinyloxazolidone, N-vinyltriazole, 4-vinylpyridine-N-oxyde ou des mélanges des monomères cités,
b) 0 à 95% en poids d'autres monomères copolymérisables à insaturation monoéthylénique et
c) 0 à 50% en poids d'au moins un monomère ayant au moins deux doubles liaisons à insaturation éthylénique non conjuguées,
dans une solution aqueuse contenant 0,5 à 30% en poids d'au moins un électrolyte et, par rapport aux monomères utilisés, 0,5 à 80% en poids d'au moins un agent tensio-actif.

2. Polymères poreux et sous forme de poudre contenant des motifs N-vinylimidazole selon la revendication 1, caractérisés en ce qu'on utilise en tant que monomère lors de la polymérisation
a)du N-vinylimidazole ou des mélanges de N-vinylimidazole et de N-vinylpyrrolidone et
b) au moins un monomère ayant au moins deux doubles liaisons à insaturation éthylénique non conjuguées.

3. Polymères poreux et sous forme de poudre contenant des motifs N-vinylimidazole selon la revendication 1 ou 2, caractérisés en ce qu'on utilise en tant qu'électrolyte des sels de métaux alcalins, de métaux alcalino-terreux, d'ammonium ou d'aluminium ou des mélanges de tels sels.

4. Procédé de préparation de polymères poreux et sous forme de poudre contenant des motifs N-vinylimidazole selon la revendication 1, caractérisé en ce que l'on polymérise
a) 5 à 100% en poids d'au moins un N-vinylimidazole de formule 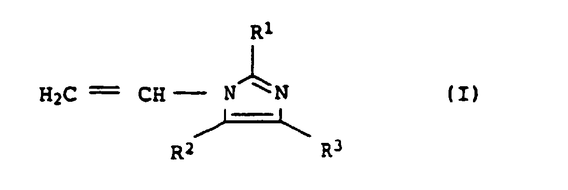 dans laquelle R¹, R² et R³ sont identiques ou différents et sont mis pour H, un groupement alkyle en C₁-C₄,
de monomères de formule 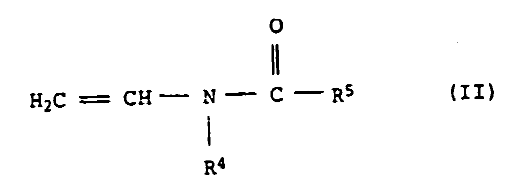 dans laquelle R⁴ et R⁵ sont identiques ou différents et sont mis pour H, un groupement alkyle en C₁-C₄ ou forment ensemble un cycle à 3-5 groupements méthylène, un groupement N-vinyloxazolidone, N-vinyltriazole, 4-vinylpyridine-N-oxyde ou des mélanges des monomères cités,
b) 0 à 95% en poids d'autres monomères copolymérisables à insaturation monoéthylénique et
c) 0 à 50% en poids d'au moins un monomère ayant au moins deux doubles liaisons à insaturation éthylénique non conjuguées,
selon le procédé de polymérisation par précipitation, en présence d'amorceurs générant des radicaux, dans une solution aqueuse contenant 0,5 à 30% en poids d'au moins un électrolyte et, par rapport aux monomères utilisés, 0,5 à 80% en poids d'au moins un agent tensio-actif.

5. Procédé selon la revendication 4, caractérisé en ce que l'on mène la polymérisation dans une solution aqueuse contenant 1 à 25 % en poids d'un électrolyte choisi dans le groupe formé par le sulfate de sodium, le carbonate de sodium, l'hydrogénocarbonate de sodium ou leurs mélanges.

6. Procédé selon la revendication 4 ou 5, caractérisé en ce que l'on utilise en tant qu'agent tensio-actif les produits de l'addition d'oxyde d'éthylène et/ou d'oxyde de propylène sur des alcools en C₁₀-C₃₀, des (alkyle en C₁-C₁₈)phénols, des amines grasses contenant au moins 12 atomes de carbone, des acides gras contenant au moins 10 atomes de carbone, des esters de saccharose, des esters de sorbitanne, des (poly)esters de glycérol ou des alkyl(poly)glucosides ayant 8 à 22 atomes de carbone dans la chaîne alkyle ou des mélanges des composés cités.

7. Procédé selon l'une quelconque des revendications 4 à 6, caractérisé en ce que l'on utilise les agents tensio-actifs en une quantité de 1 à 60% en poids.

8. Utilisation de polymères poreux et sous forme de poudre contenant des motifs N-vinylimidazole selon la revendication 1, en tant qu'additifs pour des agents de lavage pauvres en phosphates ou exempts de phosphates, pour empêcher le transfert de colorants pendant le lavage.
